(19) Europäisches Patentamt
European Patent Office
Office européen des brevets

(11) **EP 1 204 197 B1**

(12) **EUROPÄISCHE PATENTSCHRIFT**

(45) Veröffentlichungstag und Bekanntmachung des Hinweises auf die Patenterteilung:
**25.03.2009 Patentblatt 2009/13**

(51) Int Cl.:
***H02M 7/12*** *(2006.01)* ***H02M 1/12*** *(2006.01)*

(21) Anmeldenummer: **01124103.1**

(22) Anmeldetag: **10.10.2001**

(54) **Einrichtung und Verfahren zur netzseitigen Regelung der Zwischenkreisspannung**

Decive and method for network-side intermediate voltage regulation

Dispositif et procédé pour la régulation coté réseau de la tension intermédiaire

(84) Benannte Vertragsstaaten:
**AT BE CH CY DE DK ES FI FR GB GR IE IT LI LU MC NL PT SE TR**

(30) Priorität: **13.10.2000 DE 10050947**

(43) Veröffentlichungstag der Anmeldung:
**08.05.2002 Patentblatt 2002/19**

(73) Patentinhaber: **Bombardier Transportation GmbH**
**13627 Berlin (DE)**

(72) Erfinder:
• **Steiner, Michael**
**8051 Zürich (CH)**
• **Reinhold, Harry**
**76829 Landau-Mörzheim (DE)**
• **Wixinger, Beat**
**8165 Schleinikon (CH)**

(74) Vertreter: **Cohausz & Florack**
**Patent- und Rechtsanwälte**
**Postfach 10 18 30**
**40009 Düsseldorf (DE)**

(56) Entgegenhaltungen:
**EP-A- 0 488 201** **DE-A- 3 824 202**
**DE-A- 4 037 531** **DE-A- 19 711 534**
**US-A- 4 663 702** **US-A- 4 729 082**
**US-A- 5 373 223**

• **PATENT ABSTRACTS OF JAPAN vol. 1995, no. 11, 26. Dezember 1995 (1995-12-26) -& JP 07 213067 A (FUJI ELECTRIC CO LTD), 11. August 1995 (1995-08-11)**

EP 1 204 197 B1

**Beschreibung**

Die vorliegende Erfindung bezieht sich auf eine Einrichtung und ein Verfahren zur netzseitigen Regelung von Spannungen, insbesondere von Zwischenkreisspannungen. US 5,373,223 offenbart eine derartige Einrichtung.

Herkömmlich kann unter den Voraussetzungen, dass Harmonische in einer Zwischenkreisspannung keine Auswirkung auf den Netzstrom haben, d.h. eine Netzregelung nicht auf Zwischenkreis-Harmonische reagiert, und dass ein Motor eine konstante Leistung bezieht, eine Netzleistung als bekannt vorausgesetzt werden. Netzspannungsverzerrungen wirken sich jedoch negativ auf den Zwischenkreis aus. Insbesondere beeinflusst die vierte Harmonische die Zwischenkreisleistung. Während die vierte Harmonische in der Leistung wesentlich kleiner als die zweite Harmonische ist, dominiert die vierte Harmonische aber in der Spannung und ist die wesentliche Auslegungsgrösse des Zwischenkreises. Daher ist es erforderlich, Netz-Harmonische zu berücksichtigen.

Die zweite Harmonische in der Zwischenkreisleistung erzeugt dahingegen aufgrund einer niedrigen Impedanz in diesem Frequenzbereich nur eine sehr kleine zweite Harmonische in der Zwischenkreisspannung. Daher ist im Fall einer Netzspannung ohne Oberschwingungen die Zwischenkreisspannungsschwankung durch die zweite Harmonische vernachlässigbar klein.

Jedoch besteht bei herkömmlichen Einrichtungen das Problem der Netzrückwirkungen im Netzstrom.

Daher ist es Aufgabe der vorliegenden Erfindung, eine Einrichtung sowie ein Verfahren zur stabilen, schwingungsfreien netzseitigen Regelung einer Zwischenkreisspannung auszubilden.

Diese Aufgabe wird durch eine Einrichtung mit den Merkmalen des Patentanspruchs 1 sowie durch ein Verfahren mit den Merkmalen des Patentanspruchs 8 gelöst. In den Unteransprüchen sind vorteilhafte Weiterbildungen der Erfindung angegeben.

Erfindungsgemäss entstehen weiterhin Harmonische im Zwischenkreis, die bei Netzspannungs-Harmonischen toleriert werden müssen, jedoch werden durch die erfindungsgemässe Einrichtung und das erfindungsgemässe Verfahren die Netzrückwirkungen gegenüber dem Stand der Technik wesentlich reduziert und es wird eine stabile netzseitige Regelung einer Zwischenkreisspannung möglich.

Diese und weitere Merkmale, Aufgaben und Vorteile der vorliegenden Erfindung werden aus der nachstehenden Beschreibung eines bevorzugten Ausführungsbeispiels der Erfindung in Verbindung mit der Zeichnung offensichtlich.

Es zeigen:

Fig. 1 ein vereinfachtes erfindungsgemässes Regelungsschema der sinusförmigen Grössen am Beispiel von N seriengeschalteten Sub-Stromrichtern,

Fig. 2 Grundschwingungszeigerdiagramme für N=12,

Fig. 3 ein Blockschaltbild für PLL und DFT,

Fig. 4 eine Einrichtung zur Laststromaufschaltung,

Fig. 5 Signalverläufe, die die Ursache eines DC-Anteils im Stromsollwert und deren Kompensation zeigen,

Fig. 6 ein Blockschaltbild einer Einrichtung zur Ausregelung von DC-Komponenten im Sollnetzstrom,

Fig. 7 ein Blockschaltbild einer $U_N$-Aufschaltung,

Fig. 8 Fehlerspannungsamplitude bei 83 $\mu$s Totzeit,

Fig. 9 einen Signalverlauf zur Erläuterung des Prinzips der Totzeitkompensation,

Fig. 10 ein Blockschaltbild einer Netzspannungsaufschaltung mit Totzeitkompensation und Totzeit der Regelung,

Fig. 11 Signalverläufe bei einer Netzspannungskompensation mit Totzeitkompensation,

Fig. 12 ein vereinfachtes Blockschaltbild, mit dem Netzspannungssprünge erzeugt werden können,

Fig. 13 Signalverläufe des dynamischen Verhaltens bei Netzspannungssprüngen bei DFT/IFT und beim erfindungsgemässen Verfahren,

Fig. 14 Signalverläufe der Totzeitkompensation der Netzspannung mit $N_{fil} = 4$,

EP 1 204 197 B1

Fig. 15 eine vergrösserte Darstellung der Signalverläufe der Totzeitkompensation der Netzspannung mit $N_{fil} = 4$ gemäss Fig. 14,

Fig. 16 ein Blockschaltbild eines Teil der erfindungsgemässen Einrichtung zur netzseitigen Regelung einer Zwischenkreisspannung, einer dynamischen $U_{2k}$-Filtereinrichtung,

Fig. 17A und 17B Blockschaltbilder zweier alternativer Ausführungsformen einer dynamischen $U_{2k}$-Filtereinrichtung mit "Gedächtnis",

Fig. 18 Signalverläufe bei der Anwendung der Einrichtung zur netzseitigen Regelung einer Zwischenkreisspannung gemäss Fig. 16,

Fig. 19 Übertragungsfunktionen bei der Anwendung der dynamischen Filtereinrichtung mit "Gedächtnis" gemäss Fig. 17B,

Fig. 20 im Vergleich eine Einrichtung zur netzseitigen Regelung einer Zwischenkreisspannung ohne und mit Filterung,

Fig. 21 Signalverläufe zur Verdeutlichung der Dynamik der erfindungsgemässen Einrichtung zur netzseitigen Regelung einer Zwischenkreisspannung (dynamische $U_{2k}$-Filtereinrichtung),

Fig. 22 Signalverläufe der Netzspannungsvorsteuerung ($U_N$) in der Einrichtung zur netzseitigen Regelung einer Zwischenkreisspannung mit und ohne Totzeitkompensation,

Herkömmlich ist ein Zwischenkreis zwischen das Netz und einen Motor geschaltet. Eine Vorrichtung zur netzseitigen Regelung einer Zwischenkreisspannung passt eine vom Netz bezogene Leistung an die vom Motor geforderte Leistung an. Eine Differenz zwischen bezogener und abgegebener Leistung ändert den Zwischenkreisspannungswert. Gleichzeitig ist ein sinusförmiger Netzstrom gefordert. Bei der Regelung soll im Normalfall der Netzstrom in Phase zur Netzspannung geregelt werden bzw. beim Rückspeisen in Gegenphase. Nur in Ausnahmefällen ist eine Phasenverschiebung zwischen Netzstrom und Netzspannung gefordert.

Um die Netzrückwirkungen bei verzerrter Netzspannung klein zu halten, muss der Einfluss der unvermeidbaren Oberschwingungen in der Zwischenkreisspannung auf die Netzstromregelung minimiert werden.

Daher ist erfindungsgemäss eine Vorrichtung sowie ein Verfahren zur netzseitigen Regelung der Zwischenkreisspannung ausgebildet, die die folgenden Aufgaben erfüllt:

- Regelung von Zwischenkreisspannungen, die weitgehend unabhängig von der Belastung der Motorseite sein sollen.
- Netzrückwirkungsarmer Bezug/Abgabe der geforderten Antriebsleistung mit sinusförmigem Strom, der in Phase/ Gegenphase zur Netzspannung ist. Nur in Sonderfällen, die hier nicht weiter berücksichtigt werden, ist ein zur Netzspannung phasenverschobener Strom gefordert, z.B. ein kapazitiver Strom zur Stützung der Netzspannung).

Um die erste Forderung, d.h. die Regelung der Zwischenkreisspannung, zu erfüllen, muss die netzseitig bezogene Leistung an die motorseitig abgegebene Leistung angepasst werden. Eine Differenz zwischen abgegebener Leistung und bezogener Leistung ändert die Zwischenkreisspannung, da ein Zwischenkreiskondensator aufgeladen oder entladen wird. Eine Einrichtung zur netzseitigen Regelung der Zwischenkreisspannung passt daher automatisch die netzseitig bezogene Leistung an die motorseitig abgegebene Leistung an. Beim Rekuperieren bzw. elektrisches Abbremsen des Fahrzeugs beispielsweise ist der Leistungsfluss umgekehrt, der Zwischenkreis bezieht eine Leistung vom Motor, welche in das Netz zurückgespeist wird.

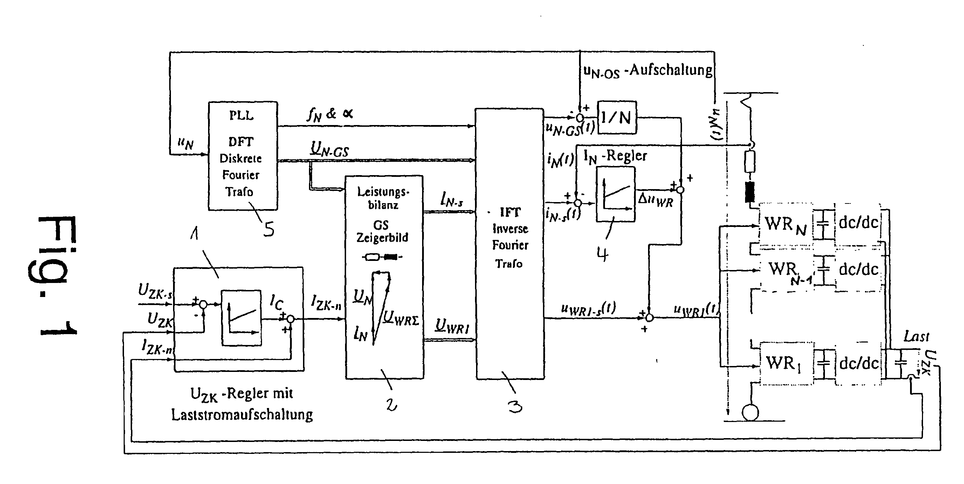

Die erfindungsgemässe Einrichtung zur Regelung der sinusförmigen Grössen der Zwischenkreisspannung verwendet eine Zeigerregelung. Ein vereinfachtes erfindungsgemässe Regelungsschema dieser sinusförmigen Grössen ist in Fig. 1 gezeigt. Im Beispiel werden N=12 seriengeschaltete Sub-Stromrichter verwendet. Herkömmlich wird lediglich der Fall N=1 realisiert, in dem es keine Serienschaltung gibt.

Gemäss diesem Regelungsschema generiert ein Zwischenkreisspannungsregler 1 einen Sollstrom $I_{ZK-n}$. Dieser Sollstrom $I_{ZK-n}$ ergibt bei Multiplikation mit einer Zwischenkreisspannung $U_{ZK}$ oder einem Sollwert der Zwischenkreisspannung $U_{ZK-n}$ eine Soll-Leistung $P_{ZK-n}$, die von der Netzseite bezogen werden soll. Diese Soll-Leistung wird einer Berechnungseinrichtung 2 zugeführt. In der Berechungseinrichtung 2 wird dann mit Hilfe eines Grundschwingungszeigerdiagramms aus der Soll-Leistung $P_{ZK-n}$ und einem Netzspannungsgrundschwingungszeiger $\underline{U}_{N-GS}$ ein Netzstromsollwertzeiger $\underline{I}_{N-s}$ und ein Wechselrichtersollspannungszeiger $\underline{U}_{WRi}$ (i = 1, 2, ..., n) berechnet. Anschliessend werden der Netzstromsollwertzeiger $\underline{I}_{N-s}$ und der Wechselrichtersollspannungszeiger $\underline{U}_{WRi}$ in einer Transformationseinrichtung 3 unter Verwendung der Inversen Fourier-Transformation bzw. IFT in den Zeitbereich transformiert, wobei sich ein Netzstromsollwert $i_{N\text{-}s(t)}$ und eine Wechselrichtersollspannung $u_{WRi\text{-}s}(t)$ ergeben. Weiterhin ist eine Netzstromregeleinrichtung 4 im Zeitbereich realisiert und hat die Aufgabe einen Netzstrom $i_N(t)$ auf seinem sinusförmigen Netzstromsollwert $i_{N\text{-}s}(t)$ zu führen. Die Netzstromregeleinrichtung 4 korrigiert die Wechselrichtersollspannung $u_{WRi\text{-}s}(t)$ bei Parameteränderungen, z.B. bei Temperaturabhängigkeit der Netzdrossel. Durch die Realisierung der Netzstromregeleinrichtung 4 im Zeitbereich werden unter anderem Gleichstrom- bzw. DC-Anteile im Netzstrom vermieden, vorausgesetzt, dass sie nicht schon im Netzstromsollwert $i_{N\text{-}s}(t)$ vorhanden sind. Weiterhin werden Netzspannungsoberschwingungen auf die Wechselrichtersollspannung $u_{WRi\text{-}s}(t)$ aufgeschaltet.

In dem in Fig. 1 gezeigten vereinfachten erfindungsgemässen Regelschema sind aus Gründen der Vereinfachung die folgenden Elemente nicht gezeigt: dynamische Filtereinrichtung für Zwischenkreisspannungen, Einrichtung zur Sollwertvorgabe der Zwischenkreisspannung beim Aufstarten der Anlage oder Leerlaufproblematik, Einrichtung zur Totzeitkompensation von Netzspannungsoberschwingungen, die jedoch im folgenden separat beschrieben und ihre Funktionen erläutert werden.

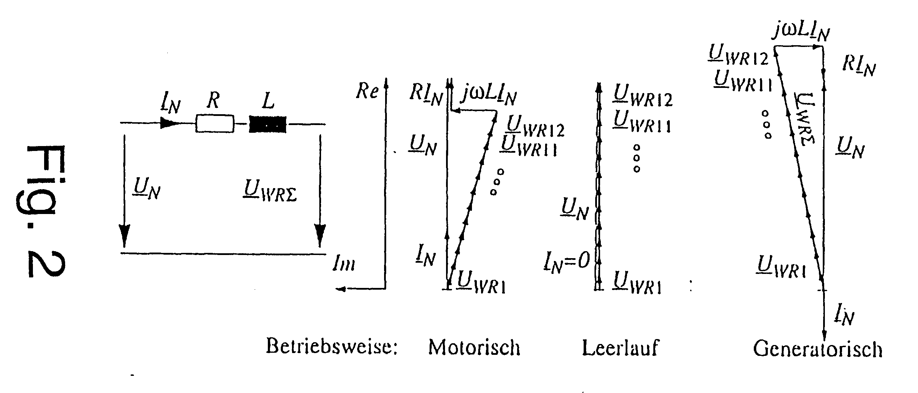

Im folgenden wird zunächst die Funktion der Berechungseinrichtung 2 gemäss Fig. 1 näher beschrieben, insbesondere auf die für die Berechnung verwendeten Grundschwingungszeigerdiagramme gemäss Fig. 2 eingegangen. Im Fig. 2 ist ein Fall für N=12 seriengeschaltete Stromrichter gezeigt.

Mit Hilfe des Grundschwingungszeigerdiagramms werden der Netzstromsollwertzeiger $\underline{I}_{N\text{-}s}$ und die Wechselrichtersollspannungszeiger $\underline{U}_{WRi\text{-}s}$ (i = 1, 2, ..., N) bestimmt. Der Zwischenkreisspannungsregler 1 dient zur Berechnung der geforderten Soll-Leistung $P_{ZK\text{-}n}$ aus dem generierten Zwischenkreissollstrom $I_{ZK\text{-}n}$ und der Zwischenkreisspannung $U_{ZK}$. Aus dieser Soll-Leistung $P_{ZK\text{-}n}$ wird in der Berechnungseinrichtung zusammen mit dem Netzspannungszeiger $\underline{U}_N$ ein Netzstromsollwertzeiger $\underline{I}_{N\text{-}s}$ berechnet. Der Netzstrom $i_N$ soll im Normalfall in Phase bzw. in Gegenphase zur Netzspannung liegen. Wird in einer Ausnahmesituation ein kapazitiver oder induktiver Stromanteil gefordert, so wird dieser über $I_{N\text{-}qsoll}$ von einer übergeordneten Regeleinrichtung, auf die hier nicht weiter eingegangen wird, vorgegeben. Über das Grundschwingungszeigerdiagramm ergibt sich der Sollwert eines Wechselrichtersummenspannungszeiger $\underline{U}_{WR\Sigma}$. Unter der Bedingung, dass $\underline{U}_N$ in Phase mit $\underline{I}_N$ ist, gilt:

$$\underline{I}_N = \frac{P_{ZK}}{\underline{U}_N^*} + \underline{I}_{N-qsoll}$$

$$\underline{U}_{WR\Sigma} = \underline{U}_N - R\underline{I}_N - j\omega L\underline{I}_N$$

Aus dem Wechselrichtersummenspannungszeiger $\underline{U}_{WR\Sigma}$ kann die Berechnungseinrichtung 2 sehr einfach einen einzelnen Wechselrichtersollspannungszeiger $\underline{U}_{WRi}$ von N in Serie geschalteten Wechselrichtern berechnen.

$$\underline{U}_{WRi} = \frac{\underline{U}_{WR\Sigma}}{N} \qquad \text{mit i = 1 ... N}$$

Aus dieser Stellgrösse Wechselrichtersollspannungszeiger $\underline{U}_{WRi}$ wird durch die Berechnungseinrichtung, wie in Fig. 2 gezeigt, ein Netzstromzeiger $\underline{I}_N$ gebildet. Mittels des von der Regelstreckeneinrichtung 5 ausgegebenen Grundschwingungsnetzspannungszeigers $\underline{U}_{N\text{-}GS}$ kann über die Zeigerbeziehung zwischen Netzspannungszeiger $\underline{U}_N$ und Wechselrichtersummenspannungszeiger $\underline{U}_{WR\Sigma}$ der Netzstromzeiger $\underline{I}_N$ in der Phasenlage und Amplitude geregelt werden.

Nachfolgend wird nun die Funktion der Regelstreckeneinrichtung 5 detaillierter beschrieben.

Die Regelung in der Regelstreckeneinrichtung 5 basiert auf einer Zeigerregelung. Daher führt die Regelstreckeneinrichtung 5 eine Transformation netzfrequenter Grössen durch und bildet sie als Gleichstrom- bzw. DC-Grössen im netzfrequenten Koordinatensystem ab. Dies hat den Vorteil, dass die Regelung von DC-Grössen besonders einfach ist. Zur Transformation der Messgrössen von z.B. der Netzspannung $u_N(t)$ wird in der Regelstreckeneinrichtung 5 bevorzugt die Diskrete Fourier-Transformation (DFT) verwendet. Alternativ könnte auch eine Transformation mit $e^{-j\omega_{GS}t}$ in ein netzfrequentes Koordinatensystem erfolgen, bei der alle Zeitgrössen, auch Oberschwingungen, in dasselbe Koordinatensystem transformiert werden, Grundschwingungen als DC-Grössen abgebildet werden und Oberschwingungen weiterhin auftreten, jedoch mit einer anderen Frequenz. Dieses Transformationsverfahren wird hier jedoch nicht beschrieben. Zudem reagiert die Regelung bei der Verwendung dieses Verfahrens entsprechend "unruhig" auf die Oberschwingungen.

Bei der Diskreten Fourier-Transformation bzw. DFT werden alle Oberschwingungen separat berechnet. Im Idealfall, z.B. bei netzsynchroner Abtastung, sind die Amplituden des Spektrums konstant, d.h. stellen in der Regelung DC-Grössen dar. Wenn auch Oberschwingungen einzeln geregelt werden sollen, müssen alle zu regelnden Frequenzen einzeln transformiert werden.

Bei dem verzerrten Bahnnetz sind beispielsweise starke Oberschwingungsanteile in der Netzspannung zu erwarten. Aus diesem Grund ist hier die DFT das bevorzugte Transformationsverfahren. Zudem kann bei der DFT ein bekanntes Verfahren zur Beeinflussung von Zwischenkreisschwankungen, das Oberschwingungen im Netzstrom einstellt, angewendet werden.

Mit Hilfe der DFT lassen sich periodische Funktionen in ihre Teilschwingungen zerlegen. Eine Fourierreihe ist durch den folgenden Ansatz gegeben:

$$f(x) = \frac{a_0}{2} + \sum_{n=1}^{\infty}(a_n \cos(nx) + b_n \sin(nx))$$

Dabei sind die Koeffizienten durch folgende Gleichungen gegeben:

$$a_n = \frac{1}{\pi}\int_{-\pi}^{\pi} f(x)\cos(nx)dx, \qquad n = 0,1,2,...$$

$$b_n = \frac{1}{\pi}\int_{-\pi}^{\pi} f(x)\sin(nx)dx, \qquad n = 0,1,2,...$$

Bei einem abgetasteten System, wie bei der erfindungsgemässen Regelung, werden die Eingangsfunktionen im Idealfall synchron zur Netzfrequenz abgetastet. Aus der Integration über eine Periode wird eine Summation über N-Abtastpunkte. N ist die Anzahl von Abtastungen pro Grundschwingungsperiode.

$$a_n = \frac{2}{N}\sum_{k=0}^{N-1} f(kT)\cos(n \cdot \frac{2\pi}{N} \cdot k), \qquad n = 0,1,2,...$$

$$b_n = \frac{2}{N}\sum_{k=0}^{N-1} f(kT)\sin(n \cdot \frac{2\pi}{N} \cdot k), \qquad n = 0,1,2,...$$

Da bei der DFT eine Summation über eine Periode durchgeführt wird, kann die Regelstreckeneinrichtung 5 nicht sofort auf einen Sprung am Eingang reagieren. Sie benötigt eine Periodendauer um den stationären Endwert zu erreichen.

Anschliessend erfolgt in der Transformationseinrichtung 3 eine Rücktransformation des Grundschwingungsnetzspannungszeigers $\underline{U}_{N\text{-}GS}$, des Netzspannungssollwertzeigers $\underline{I}_{N\text{-}s}$ sowie des Wechselrichtersollspannungszeigers $\underline{U}_{WRi}$ aus dem Frequenzbereich in den Zeitbereich mit Hilfe der inversen Fourier-Transformation bzw. IFT.

$$f(x) = \frac{a_0}{2} + \sum_{n=1}^{\infty}(a_n \cos(nx) + b_n \sin(nx))$$

Beim abgetasteten System ergeben sich die folgenden Rücktransformationen:

$$f(kT) = \frac{a_0}{2} + \sum_{n=1}^{\infty} \left[ a_n \cos\left( n \cdot \frac{2\pi}{N} \cdot k \right) + b_n \sin\left( n \cdot \frac{2\pi}{N} \cdot k \right) \right]$$

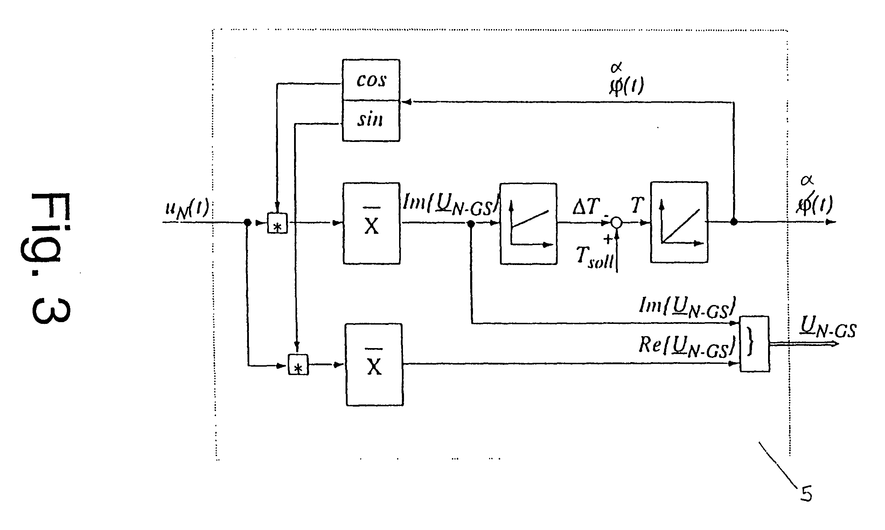

Damit der netzseitige Wechselrichter einen sinusförmigen Strom erzeugen kann, der synchron zur Netzfrequenz ist, wird er auf die Netzfrequenz synchronisiert. Dies geschieht in der Regelstreckeneinrichtung 5. Die Regelstreckeneinrichtung 5, die in Fig. 3 in Form eines Blockschaltbilds gezeigt ist, umfasst unter anderem einen "Phase Locked Loop" -Regelkreis bzw. PLL-Regelkreis 5a. In dem PLL-Regelkreis 5a erfolgt eine Synchronisation des netzseitigen Wechselrichters auf die Netzfrequenz, damit er einen sinusförmigen Strom erzeugen kann, der synchron zur Netzfrequenz ist. In dem PLL-Regelkreis 5a wird die sinusförmige Netzspannung der Frequenz $\omega_N$ mit dem Kosinus der nachzuführenden PLL-Frequenz $\omega_n$ unter Berücksichtigung der Phasenlage multipliziert. Eine Integration dieses Produkts liefert genau dann den Wert 0, wenn die Frequenz und die Phasenlage übereinstimmen. Die Aufgabe der Regelung in dem PLL-Regelkreis 5a ist es, die Abtastzeit und damit Frequenz und relative Phasenlage der PLL-Frequenz $\omega_n$ so zu regeln, dass das Integral 0 wird.

$$u_N(t) = U_N \cdot \sin(\omega_N t + \alpha)$$

$$u_P(t) = U_N \cdot \sin(\omega_N t + \alpha) \cdot \cos(\omega\ t)$$

$$u_P(t) = \frac{U_N}{2} \cdot \{ \sin[(\omega_N - \omega_n)t + \alpha] + \sin[(\omega_N + \omega_n)t + \alpha] \}$$

$$\varepsilon = \frac{1}{T} \int_0^{2\pi} u_P(t)$$

$$\varepsilon = \frac{1}{T} \int_0^{2\pi} \frac{U_N}{2} \cdot \{ \sin[(\omega_N - \omega_n)t + \alpha] + \sin[(\omega_N + \omega_n)t + \alpha] \}$$

Für den Sonderfall $\omega_n = \omega_N$ wird die Funktionsweise leicht ersichtlich:

$$\varepsilon = \frac{1}{T} \int_0^{2\pi} \frac{U_N}{2} \cdot \{ \sin[(\omega_N - \omega_n)t + \alpha] + \sin[(\omega_N + \omega_n)t + \alpha] \}$$

$$\varepsilon = U_N \cdot \pi \cdot \sin(\alpha)$$

$\varepsilon = 0$ für $\alpha = 0$

Es wurde ausgenutzt, dass das Integral über eine Periode für alle ganzzahligen Vielfachen der Grundschwingung Null wird. Im obigen Beispiel war dies der Fall für $\omega_n = \omega_N$ und $\alpha = 0$.

Das Integral wird aber auch für alle ganzzahligen Harmonischen $\omega_n = k \cdot \omega_N$ Null. Dies soll nun am Beispiel von $\omega_n = 2 \cdot \omega_N$ gezeigt werden:

$$\varepsilon = \frac{1}{T} \int\limits_{0}^{2\pi} \frac{U_N}{2} \cdot \{\sin[-\omega_N t + \alpha] + \sin[3\omega_N t + \alpha]\}$$

$\varepsilon = 0$ für $\alpha = 0$

Der PLL-Regelkreis 5a muss also auf einen bestimmten Frequenzbereich beschränkt werden, damit sie nur auf die Grundschwingung "einrastet".

Es ist noch zu beachten, dass für den Sonderfall $\omega_n = \omega_N$ und $\alpha = 0$ der Imaginärteil der Grundschwingungsspannung Im$\{U_{N-GS}\}$ mit obigem Integral E übereinstimmt.

$$\mathrm{Im}\{U_{N-GS}\} = \frac{1}{T} \int\limits_{0}^{2\pi} \frac{U_N}{2} \cdot \{\sin[\alpha] + \sin[2\omega_N t + \alpha]\}$$

Der PLL-Regelkreis 5a und die DFT 5b der Grundschwingung sind in Fig. 3 gezeigt. Der PLL-Regelkreis 5a ist ein geschlossener Regelkreis, der einen Mittelwertbildner $\overline{X}$ anstelle der Integration beinhaltet.

Beispielsweise tritt bei einem Phasensprung der Netzspannung eine Zeitverzögerung und ein Einschwingen des Ausgangsgrösse auf. Ein derartiger Phasensprung der Netzspannung kann z.B. durch einen Lastabwurf einer zweiten Lokomotive auf demselben Leitungsabschnitt mit teilweise gemeinsamer Netzimpedanz erzeugt werden. Die Auswirkung wäre ein Netzstrom, der in dieser Zeit nicht in Phase mit der Netzspannung ist, was hier als unkritisch eingestuft wird. Auch ein Amplitudensprung in der Netzspannung kann durch einen Lastabwurf einer zweiten Lokomotive hervorgerufen werden. In diesem Fall kommt eine Zeitverzögerung in der DFT 5a durch den Mittelwertbildner $\overline{X}$ zum Tragen. Dieser Fall resultiert in einem Amplitudenfehler der Netzspannungsvorsteuerung, der von der Netzstromregeleinrichtung 4 korrigiert wird,

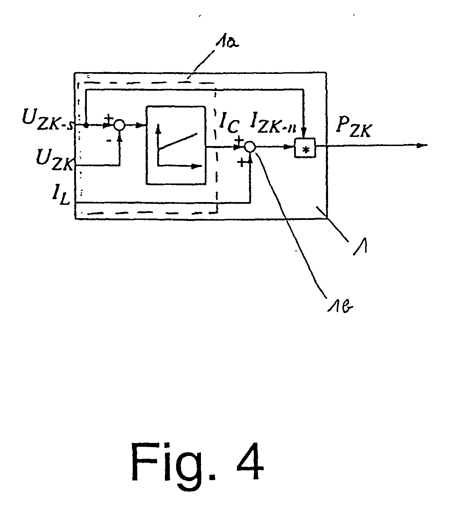

Im folgenden wird nun genauer auf den Zwischenkreisspannungsregler 1 eingegangen. Der Zwischenkreisspannungsregler 1 ist in Fig. 4 separat dargestellt. Er führt eine Vorsteuerung eines Laststromes $I_{ZK-m}$ bzw. $I_L$ aus dem Zwischenkreis durch. Dazu wird der Laststrom $I_L$, der motorseitig aus dem Zwischenkreis entnommen wird, dem Zwischenkreisspannungsregler 1 zugeführt und durch eine Additionseinrichtung 1b direkt, fast verzögerungsfrei zum Sollwert $I_C$ eines Zwischenkreisspannungsregel-einrichtung 1a addiert. Auf diese Weise fordert die netzseitige Regelung bereits eine Leistung $P_{ZK}$, bevor die Zwischenkreisspannung $U_{ZK}$ abgesunken ist. Der Laststrom $I_L$ kann auf verschiedene Wege bestimmt werden, die jedoch nicht gezeigt sind, beispielsweise durch Berechnung durch die Motorregelung oder durch indirekte Messung z.B, des pulsförmigen Zwischenkreisstromes, wobei eine sehr gute Filterung mit entsprechend grosser Totzeit erforderlich ist.

Weiterhin ist die erfindungsgemässe Einrichtung derart ausgebildet, dass ein DC-Anteils im Netzstrom vermieden wird, die erforderlich ist, damit die Transformatoren in den Unterwerken nicht sättigen.

Diese Funktion wird durch die Netzstromregeleinrichtung 4 durchgeführt, die im Zeitbereich realisiert ist. Aufgrund der Realisierung im Zeitbereich ist die Netzstromregeleinrichtung 4 prinzipiell in der Lage einen DC-Anteil im Netzstrom auszuregeln. Selbst sehr kleine DC-Ströme werden über den Imaginär- bzw. I-Anteil erfasst und ausgeregelt. Dazu muss lediglich sichergestellt sein, dass die Stromerfassung und die Analog-Digital- bzw. AD-Wandlung genau genug sind.

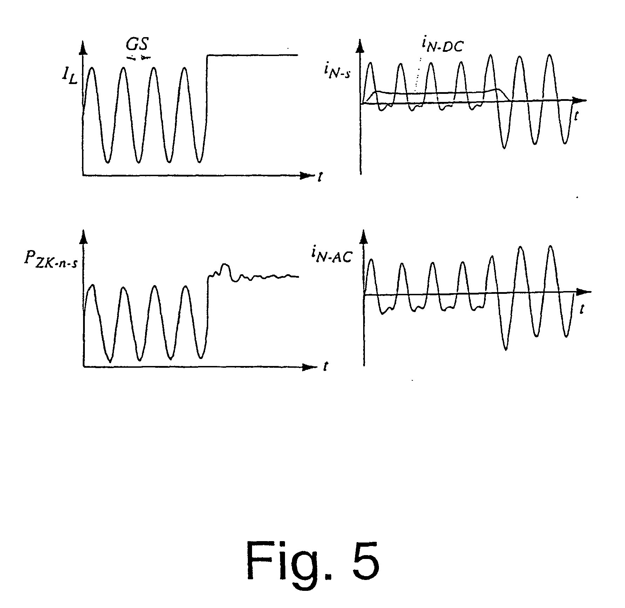

Kritischer ist jedoch die Kompensation eines DC-Anteils $i_{N-DC}$ im Stromsollwert $i_{N-s}$, Dies soll am Beispiel der in Fig. 5 gezeigten Signalverläufe, die die Ursache des DC-Anteils $i_{N-DC}$ im Stromsollwert $i_{N-s}$ und deren Kompensation zeigen, näher erläutert werden. Hier wird ein Laststrom $I_L$ aus dem Zwischenkreis angenommen, der einen netzfrequenten Anteil enthält. Diese Laststromkomponente erzeugt über den Zwischenkreisspannungsregler 1 einen netzsynchronen Anteil in der Leistungsanforderung $P_{ZK-n-s}$ aus dem Netz bzw. im Netzstromsollwertzeiger $I_{N-s}$. Je nach Phasenlage ergibt sich nach der IFT bereits im Sollwert des Netzstromes $i_{N-s}$ ein DC-Anteil $i_{N-DC}$. Dies wird an einem Beispiel deutlich. In diesem extremen Beispiel wird angenommen, dass der Netzstromsollzeiger $I_{N-s}$ nur einen netzfrequenten Anteil enthält, der in Phase zur Netzspannung ist. Nach der Transformation in den Zeitbereich (hierbei entspricht die IFT einer Multiplikation mit $\sin(\omega_N t)$) ergibt sich ein DC-Anteil $i_{N-DC}$ im Netzstromsollwert $i_{N-s}(t)$:

$$\underline{I}_{N-s} = I_{w_N} \cdot \sin(\omega_N t)$$

$$i_N(t) = \underline{I}_{N-S} \cdot \sin(\omega_N t)$$

$$i_N(t) = I_{\omega_N} \cdot \sin(\omega_N t) \cdot \sin(\omega_N t) = \frac{I_{\omega_N}}{2} - \frac{I_{\omega_N}}{2}\cos(2\omega_N t)$$

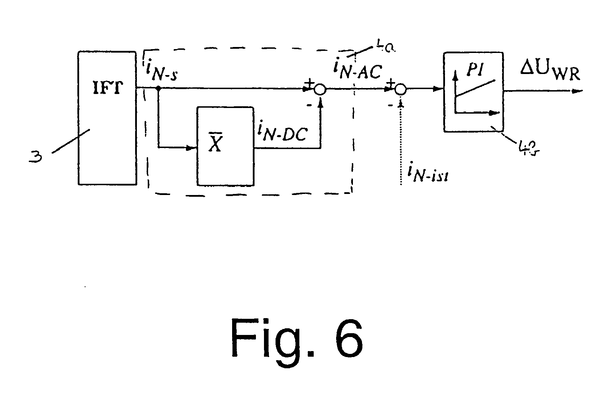

Der DC-Anteil $i_{N-DC}$ im Netzstromsollwert $i_{N-s}$ kann durch geeignete Filterung kompensiert werden. Die erfindungsgemässe Netzstromregeleinrichtung 4 mit Ausregelung des DC-Anteils $i_{N-DC}$ im Netzstromsollwert $i_{N-s}$ ist in Fig. 6 in Form eines Blockschaltbilds gezeigt. Hierbei umfasst die Netzstromregeleinrichtung 4 ein fliessendes Mittelwertfilter 4a sowie eine diesem nachgeschaltete PIRegeleinrichtung 4b. Der DC-Anteil $i_{N-DC}$ im Netzstromsollwert $i_{N-s}$ wird durch die Netzstromregeleinrichtung 4 über das fliessende Mittelwertfilter 4a bestimmt. Das fliessende Mittelwertfilter 4a summiert hierzu alle zeitdiskreten Werte des Netzstromsollwerts $i_{N-s}$ über eine (oder mehrere) Perioden auf. Sind ansonsten nur netzfrequente Komponenten im Netzstromsollwert $i_{N-s}$ vorhanden, ist bereits nach einer Periode der exakte DC-Anteil $i_{N-DC}$ des Netzstromsollwerts $i_{N-s}$ bestimmt.

$$i_{N-DC} = \frac{1}{N} \cdot \sum_{i=1}^{N} i_{N-s}(t_i)$$

mit N-Abtastungen pro Periode

Auf diese Weise wird mit der erfindungsgemässen Netzstromregeleinrichtung 4 der DC-Anteil $i_{N-DC}$ des Netzstromsollwerts $i_{N-s}$ zuverlässig ausgeregelt.

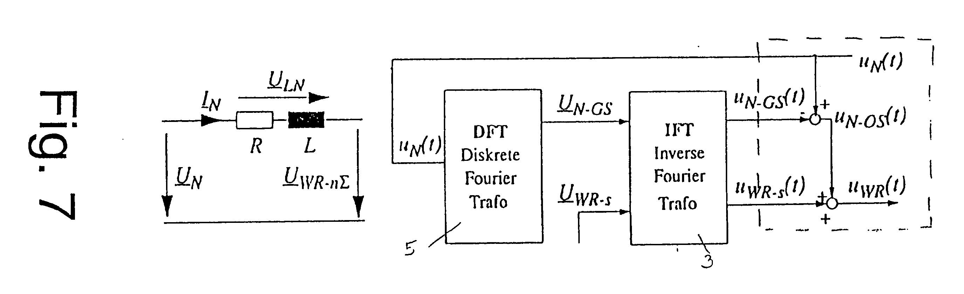

Ausserdem ist bei der erfindungsgemässen Einrichtung noch eine Einrichtung zur Netzspannungsaufschaltung 6 ausgebildet, deren Blockschaltbild in Fig. 7 gezeigt ist. Diese Einrichtung zur Netzspannungsaufschaltung 6 hat die Aufgabe, die Netzstromregeleinrichtung 4 bei Netzspannungs-Harmonischen zu entlasten. Um die Totzeit zwischen Abtastung der Netzspannung und Schaltvorgang des Wechselrichters zu kompensieren, ist eine Kompensationsermittlungseinrichtung 7a zur Vorausberechnung der vorzusteuernden Netzspannung $u_{NV}(t)$ ausgebildet.

Das durch diese Einrichtung zur Netzspannungsaufschaltung 6 verwirklichte Regelungskonzept beruht auf einer Zeigerregelung der Grundschwingungsgrössen. Zielsetzung ist ein sinusförmiger Strom ohne Oberschwingungen. Dies ist erfüllt, wenn der Spannungsabfall $\underline{U}_{LN}$ über die Netzdrossel nur einen Grundschwingungsanteil enthält. In diesem Fall müssen die Oberschwingungen in der Netzspannung $\underline{U}_{N-OS}$ und im Kurzzeitmittelwert der Wechselrichtersummenspannung $\underline{U}_{WR-n\Sigma-OS}$ gleich sein. Dies wird durch Aufschaltung der Netzspannungsoberschwingungen auf die Wechselrichtersummenspannung erreicht werden.

Die aufzuschaltenden Netzspannungs-Harmonischen ergeben sich aus der Differenz des Netzspannungsistwertes $u_N(t)$ und der Netzspannungsgrundschwingung $u_{N-GS}(t)$, welche bereits mit der DFT in der Regelstreckeneinrichtung 5 bestimmt wurde:

$$u_{N-OS}(t) = u_N(t) - u_{N-GS}(t)$$

Diese Netzspannungsaufschaltung ist jedoch mit einer Totzeit behaftet. Diese Totzeit setzt sich aus folgenden Anteilen zusammen:

- Totzeit der Pulsweitenmodulation bzw. PWM: die mittlere Totzeit ist eine halbe Periode der resultierenden Schaltfrequenz (und wird hier beispielsweise mit 0,5/12kHz angenommen)
- Verarbeitungstotzeit bestehend aus Abtasttotzeit und Regelungstotzeit (wird hier beispielsweise ebenfalls mit 0,5/12kHz angenommen)

Die Verarbeitungszeit kann durch eine Abtastung und Verarbeitung kurz vor Übergabe des nächsten Modulationsgrades an die PWM reduziert werden. Die Totzeit der PWM kann bei einer Abtastregelung nicht verkleinert werden.

Die gesamte Totzeit wird mit einer Abtastperiode zu $T_{tot} = T = 1/(12kHz) = 83\ \mu s$ angenommen. Diese Totzeit erscheint zunächst sehr klein, ist aber bei genauerer Betrachtung für eine direkte Aufschaltung der Netzspannung zu gross.

$$\underline{\Delta u}_{N-nOS}(t) = U_{N-nOS} \cdot e^{jn\omega t} - U_{N-nOS} \cdot e^{jn\omega \cdot (t-T_{tot})}$$

$$\underline{\Delta u}_{N-nOS}(t) = U_{N-nOS} \cdot (1 - e^{jn\omega T_{tot}}) \cdot e^{jn\omega t}$$

$$\underline{\Delta U}_{N-nOS} = U_{N-nOS} \cdot (1 - e^{jn\omega T_{tot}})$$

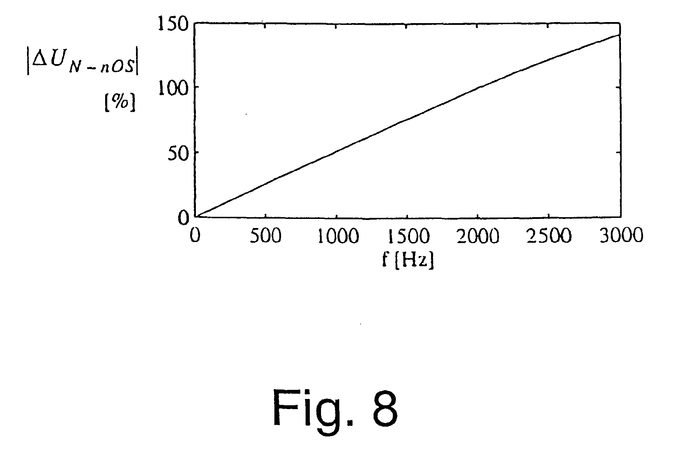

Zur Verdeutlichung ist die Fehlerspannungsamplitude bei 83 ms Totzeit beim 15kV / 16,7 Hz Netz in Fig. 8 gezeigt.

Wie aus Fig. 8 ersichtlich, kann der grosse Fehler bei dieser Totzeit nicht akzeptiert werden. Bei 2 kHz ist der Fehler grösser als die Netzspannungsoberschwingung •$\Delta U_{N-nOS}$•, die auch noch bei dieser Frequenz, zumindest teilweise, kompensiert werden sollte.

Daher ist erfindungsgemäss eine Einrichtung zur Totzeitkompensation 7 ausgebildet. Es gibt mehrere Lösungsmöglichkeiten zur Totzeitkompensation in dieser Einrichtung zur Totzeitkompensation 7:

- mit der DFT können Oberschwingungen bestimmt und in der IFT kann die Totzeit durch Phasendrehung kompensiert werden oder
- die Fehlerspannung kann aus den vergangenen Netzperioden berechnet und aufgeschaltet werden

Die erste Möglichkeit mit DFT/IFT wird herkömmlich mit grosser Trafostreuinduktivität benutzt. Hierbei werden nur die Grundschwingung, die dritte und fünfte Oberschwingung berücksichtigt.

Bei in Serie geschalteten Wechselrichtern wird jedoch eine sehr kleine Netzdrossel angestrebt. Durch diese Massnahme wirken sich Netzspannungsoberschwingungen jedoch viel stärker aus. Aus diesem Grund wird eine breitbandige Aufschaltung der Netzspannungsoberschwingungen angestrebt. Bei der bevorzugten Realisierung der Erfindung wird daher die DFT/IFT aus Rechenaufwandsgründen zurückgestellt und die zweite Möglichkeit der Berechnung der Fehlerspannung aus vergangenen Netzperioden wird verwendet. Es ist jedoch für den Fachmann offensichtlich, dass die erste Möglichkeit ebenfalls verwendet werden kann.

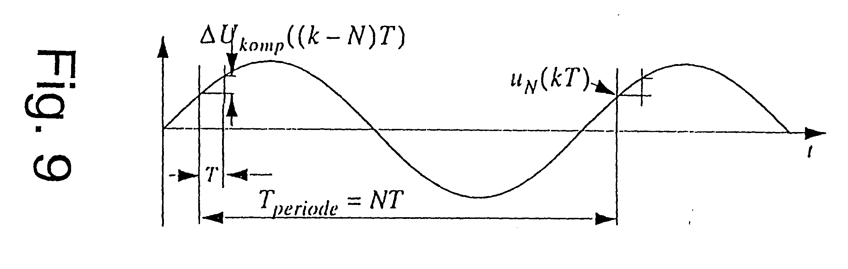

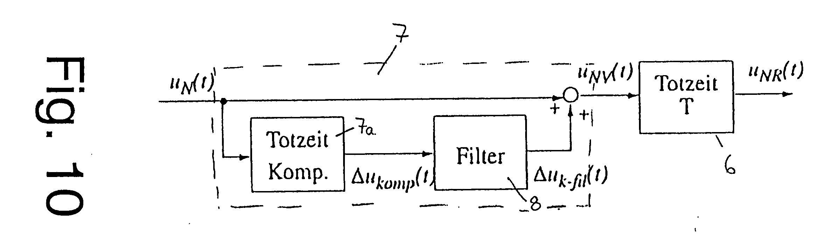

Im folgenden wird unter Bezugnahme auf Fig. 9 und 10 das Prinzip der erfindungsgemässen Totzeitkompensation sowie ein Blockschaltbild einer erfindungsgemässen Netzspannungsaufschaltung mit Totzeit näher erläutert.

Die Totzeitkompensation durch die Einrichtung zur Totzeitkompensation 7 soll die Aufgabe erfüllen, einen zukünftigen Netzspannungswert $u_{NV}(t)$ abzuschätzen. Dazu addiert die Einrichtung zur Totzeitkompensation 7 zum Momentanwert der Netzspannung $u_N(t)$ einen kleinen Schätzwert $\Delta u_{komp}(t)$, der aus der Erfahrung mit den letzten Perioden gewonnen wird.

Der Schätzwert $\Delta u_{komp}(t)$ ist bei stationären Signalen periodisch und kann daher durch die Kompensationsermittlungseinrichtung 7a aus den Spannungen $u_N((k-N)T)$ der letzten Periode gewonnen werden. Dabei ist in der Darstellung gemäss Fig. 9 T die Abtastzeit, N die Anzahl der Abtastungen pro Netzperiode und k gibt den jeweiligen abgetasteten Momentanwert an.

$$\Delta u_{komp}((k-N)T) = u_N((k-N+1)T) - u_N((k-N)T)$$

$$u_N((k+1)T) = u_N((kT) + \Delta u_{komp}((k-N) \cdot T)$$

Um zusätzlich eine Unempfindlichkeit gegenüber Störungen zu erreichen, kann nach dieser an sich alleine für die Totzeitkompensation ausreichenden Kompensation durch die Kompensationsermittlungseinrichtung 7a noch eine Filtereinrichtung 8 ausgebildet. Hierzu werden in der Filtereinrichtung 8 Werte über mehrere Netzperioden gespeichert und es wird eine fliessende Mittelwertbildung über mehrere Perioden vorgenommen. Der Wert $\Delta u_{k-fil}$ ist der über $N_{fil}$-Perioden gefilterte Wert von $\Delta u_{komp}$:

$$\Delta u_{k-fil}((k-N)\cdot T) = \frac{1}{N} \cdot \sum_{i=1}^{N_{fil}} \Delta u_{komp}((k-i\cdot N)\cdot T)$$

$$u_{NV}(kT) = u_N(kT) + \Delta u_{k-fil}((k-N)\cdot T)$$

$$u_N((k+1)T) = u_{NV}(kT)$$

Im Fall der zusätzlichen Ausbildung der Filtereinrichtung 8 wird dann der gefilterte Schätzwert $\Delta u_{komp}(t)$ zum Momentanwert der Netzspannung $u_N(t)$ addiert. Anschliessend wird der sich ergebende vorzusteuernde Netzspannungswert $u_{NV}(t)$ der mit einer Totzeit behafteten Einrichtung zur Netzspannungsaufschaltung 6 zugeführt.

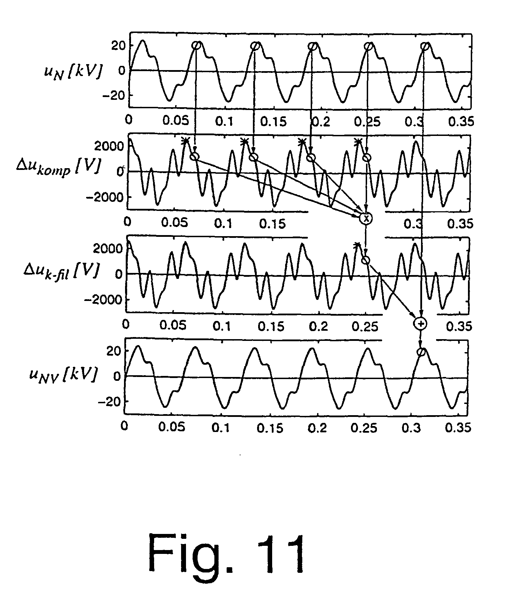

Signalverläufe bei einer Netzspannungskompensation mit Totzeitkompensation sind in Fig. 11 gezeigt. Die Netzspannung $u_N$ enthält in diesem Beispiel starke Oberschwingungen. Im Signalverlauf darunter ist die Spannung $\Delta u_{komp}$ dargestellt, die sich aus der Differenzspannung der Netzspannung zweier aufeinanderfolgender Abtastzeitpunkte ergibt und durch die Kompensationsermittlungseinrichtung 7a ermittelt wird. Bei einer stationären Netzspannung $u_N$ ist auch die Spannung $\Delta u_{komp}$ periodisch. Im nächsten Schritt wird die Spannung $\Delta u_{komp}$ durch die Filtereinrichtung 8 über mehrere Perioden gemittelt, hier im Beispiel über $N_{fil} = 4$ Perioden. Die Spannung $\Delta u_{k-fil}$ enthält die Mittelwertbildung über 4 Werte, jeweils einen pro Periode, die in Fig. 11 durch o und * gekennzeichnet sind. Hierdurch wird eine Filterung erreicht, bei der bei einer stationären Netzspannung nahezu keine Oberschwingungen verloren gehen. Die vorzusteuernde Netzspannung $u_{NV}$ ergibt sich aus der Addition der aktuellen Netzspannung $u_N$ und der Spannung $\Delta u_{k-fil}$, die durch die Kompensationsermittlungseinrichtung 7a und die Filtereinrichtung 8 aus der Netzspannung der letzten Perioden gebildet ist.

Die Netzspannungsaufschaltung mit dem erfindungsgemässen Aufbau und nach diesem erfindungsgemässen Verfahren hat den Vorteil, dass der verwendete Netzspannungswert $u_{NV}(t)$ aus zwei Komponenten besteht:

-   aus einem dynamischen Anteil der aktuellen Netzspannung $u_N(kT)$ und
-   aus einem kleinen stationären Anteil der gefilterten Differenzspannung $\Delta u_{k-fil}(kT)$, die durch die Totzeit gegeben ist.

Die durch die in Fig. 10 gezeigte Kompensationsermittlungseinrichtung 7a durchgeführte Berechnung wird im folgenden an einigen Beispielen veranschaulicht. Dabei wurde jeweils ein 16,7 Hz Netz vorausgesetzt. Die Abtastfilterung arbeitet mit einer Abtastzeit von T = 83 $\mu$s (entsprechend 12 kHz). Abgetastet wird jeweils in der Mitte der PWM-Abtastperiode. Eine Periode besteht damit aus N = 720 Abtastwerten. Die Filterung wird über 4 Perioden vorgenommen.

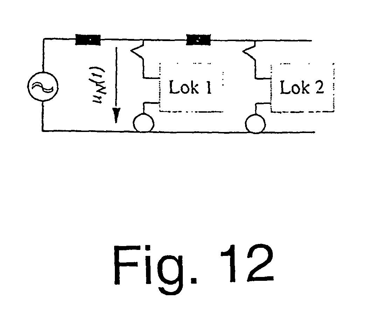

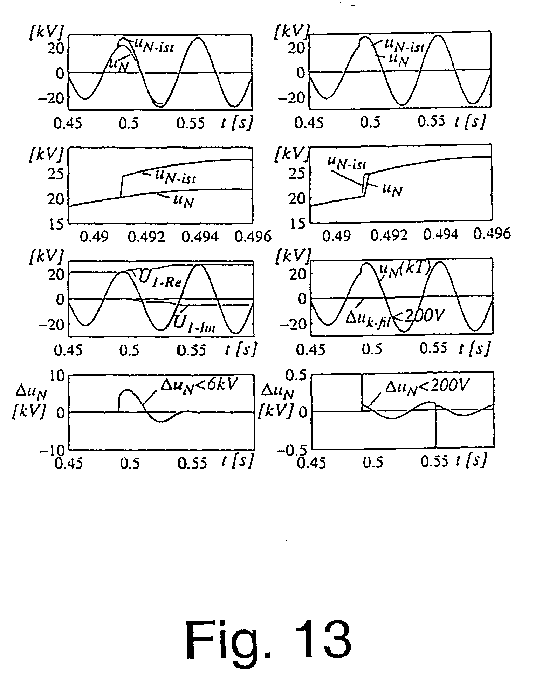

Im ersten Beispiel gemäss Fig. 13 wird die Dynamik des Verfahrens der erfindungsgemässen Netzspannungsaufschaltung mit Totzeitkompensation im Vergleich zum Verfahren mit DFT/IFT dargestellt. Dazu wird ein Lastabwurf einer weiteren Lokomotive (LOK2) im gleichen Fahrleitungsabschnitt angenommen, der durch das vereinfachte Blockschaltbild gemäss Fig. 12 simuliert wird. Es werden dabei folgende vereinfachte Auswirkungen auf die Eingangsspannung der betrachteten Lokomotive (LOK1) angenommen:

-   Phasensprung um -10 Grad
-   Amplitudensprung auf 130%

Als Folge hiervon tritt in Fig. 13 zum Zeitpunkt t = 0,48s ein Amplitudensprung im Netzspannungsistwert $u_{N-ist}$ auf. Bei dem DFT/IFT-Verfahren dauert es eine ganze Netzperiode, bis der Rechenwert der Netzspannung $u_N$ mit dem Netzspannungsistwert $u_{N-ist}$ übereinstimmt. Bei der erfindungsgemässen Einrichtung und dem erfindungsgemässen Verfahren dauert es nur eine Abtastperiode T bis der Rechenwert der Netzspannung $u_N$ annähernd gleich gross ist wie der Netzspannungsistwert $u_{N-ist}$. Da der Fehler $\Delta u_N$ bei der erfindungsgemässen Einrichtung und dem erfindungsgemässen Verfahren sehr viel kleiner ist als bei dem DFT/IFT-Verfahren, wurde die Skalierung der Darstellung in den unteren Signalverläufen in Fig. 13 entsprechend angepasst.

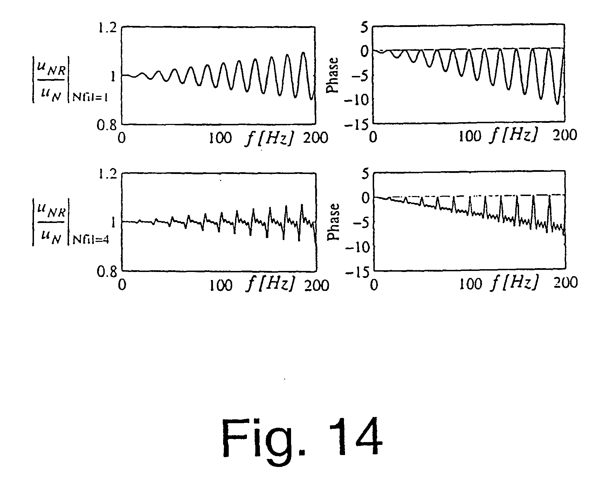

Die sich ergebenden z-Übertragungsfunktionen sind in Fig. 14 gezeigt und erfüllen die folgenden Gleichungen:

$$\frac{\Delta u_{komp}(z)}{u_N(z)} = z^{-N+1} - z^{-N}$$

$$\frac{\Delta u_{\lambda\,_{fil}}(z)}{u_N(z)} = \frac{(z^{-N+1} - z^{-N}) \cdot (1 + z^{-1N} + z^{-2N} + z^{-3N})}{4}$$

$$\frac{\Delta u_{NV}(z)}{u_N(z)} = \frac{4 - (z^{-N+1} - z^{-N}) \cdot (1 + z^{-1N} + z^{-2N} + z^{-3N})}{4}$$

$$\frac{\Delta u_{NR}(z)}{u_N(z)} = \frac{4 - (z^{-N+1} - z^{-N}) \cdot (1 + z^{-1N} + z^{-2N} + z^{-3N})}{4 \cdot z}$$

Aus Fig. 14 ist zu entnehmen, dass die Filterung der Totzeitkompensation über mehrere Perioden T dazu führt, dass sich für asynchrone Frequenzen (Nicht-Vielfache der Netzfrequenz), die Übertragungsfunktion der direkten Aufschaltung der Netzspannung angleicht.

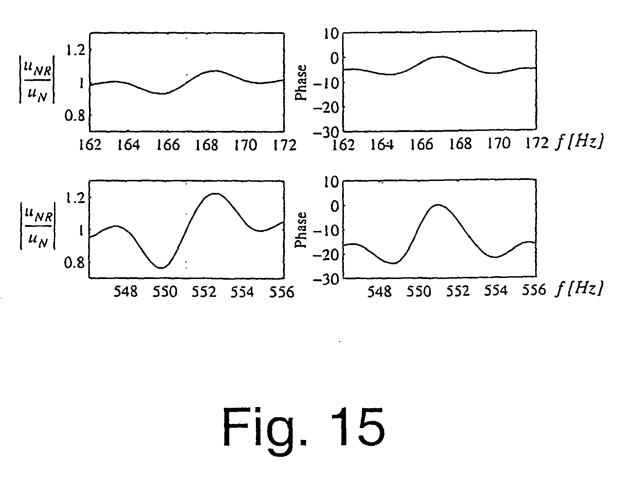

In Fig. 15 sind vergrösserte Ausschnitte der z-Übertragungsfunktionsverläufe gemäss Fig. 14 mit $N_{fil}$ = 4 dargestellt. Bei nichtsynchronen Oberschwingungen zur Netzspannung nimmt aufgrund der asynchronen Abtastung die Wirksamkeit der Aufschaltung mit der Frequenz ab. Insbesondere bei den niederfrequenten Harmonischen ist einerseits der Fehler durch die Abtastung sehr klein und andererseits sind ursachenbedingte netzsynchrone Oberschwingungen, z.B. durch Fahrzeuge mit netzsynchroner Phasenanschnittsteuerung, zu erwarten.

Wie aus Fig. 15 ersichtlich, stellt die Totzeitkompensation hohe Anforderungen an die Genauigkeit der Abtastung bzw. der Synchronisation des PLL-Regelkreises: Bei 551 Hz, d.h. der 33ten Harmonischen, sollte die Genauigkeit bei z.B. 1 Hz liegen, Dies entspricht einer Genauigkeit von 1Hz/33 bei der Synchronisation auf die 16,7Hz Grundschwingung (entsprechend 0,18%). Aus diesem Grund ist davon auszugehen, dass die Totzeitkompensation nur bis in den unteren kHz-Bereich Vorteile bringt.

Die Einrichtung zur Netzspannungsaufschaltung 6 mit Einrichtung zur Totzeitkompensation 7 sollte daher mit einer (nicht gezeigten) Tiefpassfiltereinrichtung am Eingang ausgelegt sein, die die hohen Frequenzen ab einigen kHz ausfiltert. Die genaue Auslegung der maximal nutzbare Frequenz kann erst an einer konkreten Anwendung vorgenommen werden.

Für niederfrequente Oberschwingungen wurde mit der Totzeitkompensation eine gute und dynamische Lösung gefunden. Bis in den unteren kHz Bereich wird damit eine Erhöhung der Eingangsimpedanz erwartet.

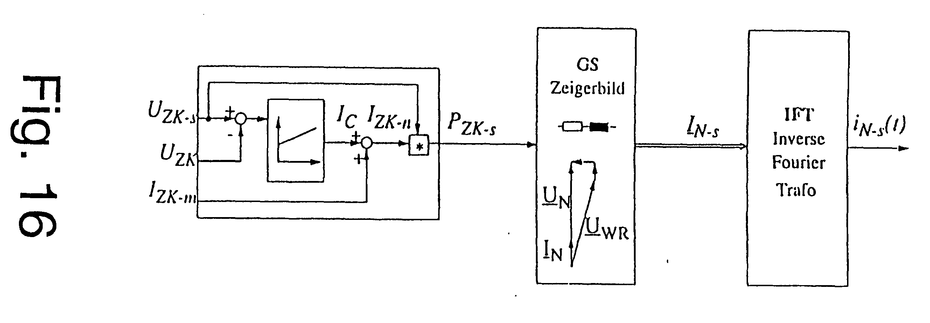

Eine Weiterbildung der erfindungsgemässen Einrichtung und des Verfahrens zur netzseitigen Regelung einer Zwischenkreisspannung mit einer dynamischen Filtereinrichtung für Oberschwingungen der Zwischenkreisspannung $U_{ZK}$ und ihrer Funktionsweise wird nachfolgend unter Bezugnahme auf ein in Fig. 16 gezeigtes Blockschaltbild eines Netzstrompfads genauer beschrieben. Oberschwingungen in der Netzspannung $u_N$ verursachen, wie bereits vorstehend erwähnt, Oberschwingungen in der Zwischenkreisspannung $U_{ZK}$. Diese Oberschwingungen in der Zwischenkreisspannung $U_{ZK}$ würden sich ohne Gegenmassnahmen in den Netzstrom $I_N$ übertragen. Aus diesem Grund ist insbesondere der in Fig. 16 dargestellte Teil der erfindungsgemässen Einrichtung zur netzseitigen Regelung einer Zwischenkreisspannung ausgebildet.

Die Übertragung von Oberschwingungen von der Zwischenkreisspannung $U_{ZK}$ in den Netzstromsollwert $\underline{I}_{N-s}$ kann sehr übersichtlich am entsprechenden Regelungspfad dargestellt werden. Der Zwischenkreisspannungsregler 1 mit PI-Regelung macht aus einer Oberschwingung in der Zwischenkreisspannung $U_{ZK}$ eine phasenverschobene Oberschwingung derselben Frequenz in der Leistungsanforderung $P_{ZK-s}$ bzw. im Netzstromsollwertzeiger $\underline{I}_{N-s}$. Nach der IFT, d.h. der Transformation in den Zeitbereich, ergeben sich Oberschwingungen im Netzstromsollwert $i_{N-s}(t)$.

Dies wird nun an einem Beispiel verdeutlicht. Eine vierte Harmonische in der Zwischenkreisspannung $U_{ZK}$ erzeugt eine phasenverschobene vierte Harmonische in der Leistungsanforderung $P_{ZK-n-s}(t)$. Der Netzstromsollwert des Netzstromsollwertzeigers $\underline{I}_{N-s}$ (Zeigergrösse) ist proportional zu der Leistungsanforderung $P_{ZK-n-s}$ und enthält daher auch eine vierte Harmonische. Zusammen mit der IFT ergibt sich eine dritte und eine fünfte Harmonische des Netzstromsollwert $i_{N-s}(t)$:

$$P_{ZK-n\sim s}(t) = P_{ZK-DC} + P_{ZK-4} \cdot \sin(4\omega t + \varphi)$$

$$\underline{I}_{N-s} = \underline{I}_{N-DC} + \underline{I}_{N-4} \cdot \sin(4\omega t + \varphi)$$

$$i_{N-s}(t) = \{\underline{I}_{N-DC} + \underline{I}_{N-4} \cdot \sin(4\omega t + \varphi)\} \cdot \sin(\omega t)$$

$$i_{N-s}(t) = \underline{I}_{N-DC} \cdot \sin(\omega t) + \frac{\underline{I}_{N-4}}{2} \cdot \sin(3\omega t) + \frac{\underline{I}_{N-4}}{2} \cdot \sin(5\omega t)$$

Eine zweite Harmonische in der Zwischenkreisspannung $U_{ZK}$ erzeugt eine phasenverschobene zweite Harmonische in der Leistungsanforderung $P_{ZK-m-s}(t)$. Zusammen mit der Grundschwingungsanforderung des Netzstromes ergibt das eine erste und dritte Harmonische im Sollwert des Netzstromes.

Damit sich Oberschwingungen in der Zwischenkreisspannung $U_{ZK}$ nicht in den Netzstrom $I_N$ übertragen, müssen die Oberschwingungen ausgefiltert werden. Dies sollte nicht mit einem Tiefpass realisiert werden, da dynamische Zwischenkreisspannungsänderungen aufgrund von Lastsprüngen möglichst ohne Totzeit ausgeregelt werden sollen. Daher wird eine dynamische Filtereinrichtung 9 ausgebildet, in der die Oberschwingungen gefiltert und dann vom Istwert der Zwischenkreisspannung $U_{ZK}$ subtrahiert werden.

Es gibt mindestens zwei Möglichkeiten, die Oberschwingungen der Zwischenkreisspannung $U_{ZK}$ zu bestimmen, zu filtern und von der Zwischenkreisspannung $U_{ZK}$ zu subtrahieren:

- mit einer DFT können gezielt Oberschwingungen bestimmt und mit der IFT von der Zwischenkreisspannung abgezogen werden oder
- Oberschwingungen können aus vergangenen Netzperioden berechnet werden.

Im folgenden werden zwei bevorzugte erfindungsgemässe Realisierungen für dynamische Filtereinrichtungen beschrieben. Hierbei sollen die zweite, vierte, sechste, usw. Harmonische aus der Zwischenkreisspannung $U_{ZK}$ gefiltert werden, wobei besonderer Wert auf die Filterung der vierten Harmonischen gelegt wird, da diese die Zwischenkreisleistung aufgrund ihrer Dominanz in der Spannung wesentlich beeinflusst.

Im Fall der Berechnung aus vergangenen Netzperioden ist es ausreichend nur wenige Oberschwingungen (zweite, vierte und sechste Harmonische) zu berücksichtigen. Beide Verfahren sind in etwa gleichwertig und kein Verfahren hat einen wesentlichen Vorteil bezüglich Rechenzeit.

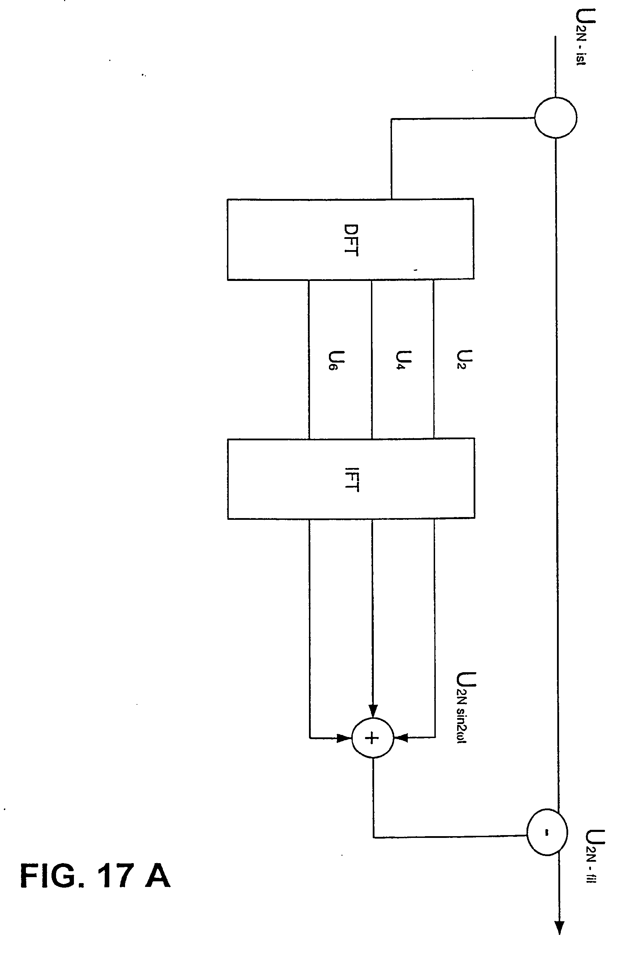

Zuerst wird nun auf das Verfahren mit DFT und IFT näher eingegangen. Die dynamische Filtereinrichtung 9 gemäss einem ersten Ausführungsbeispiel der Erfindung ist wie in Fig. 17A gezeigt aufgebaut und in einer (nicht gezeigten) Abtastregeleinrichtung implementiert. Die Zwischenkreisspannung $U_{ZK}(t)$, hier eine Zwischenkreisspannung in der nur 2n-fache Oberschwingungen berücksichtigt werden, wird einer DFT-Transformationseinrichtung 10a zugeführt. Diese DFT-Transformationseinrichtung 10a führt für alle Oberschwingungen separat eine Transformation in den Frequenzbereich durch und gibt Oberschwingungszeiger $\underline{U}_2$, $U_4$, ..., $\underline{U}_{2n}$ mit n = 1, 2, 3, ... aus. Diese Oberschwingungszeiger $\underline{U}_2$, $U_4$, ..., $\underline{U}_{2n}$ werden einer IFT-Transformationseinrichtung 10b zugeführt, die eine Rücktransformation in den Zeitbereich durchführt, wodurch Oberschwingungen $u_2\sin2\omega t$, $u_4\sin4\omega t$, ..., $u_{2n}\sin2n\omega t$, n = 1, 2, 3, ... erhalten werden, die anschliessend addiert und von der Zwischenkreisistspannung $U_{2n-ist}$ subtrahiert werden. Aus der sich ergebenden Zwischenkreisspannung $U_{2n-fil}$ sind somit die 2ten bis 2n-ten Oberschwingungen der Zwischenkreisspannung $U_{2n-ist}$ herausgefiltert.

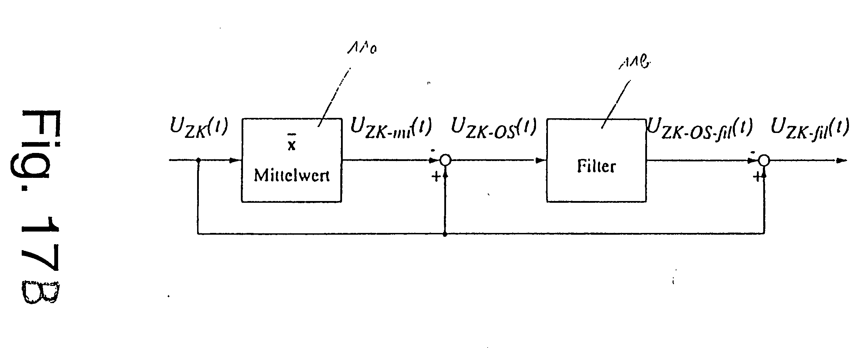

Alternativ können gemäss einem zweiten Ausführungsbeispiel der Erfindung, das in Fig. 17B gezeigt ist, Oberschwingungen aus vergangenen Netzperioden berechnet werden. Dieses zweite erfindungsgemässe Verfahren sowie dessen Aufbau im Blockschaltbild werden im folgenden näher analysiert.

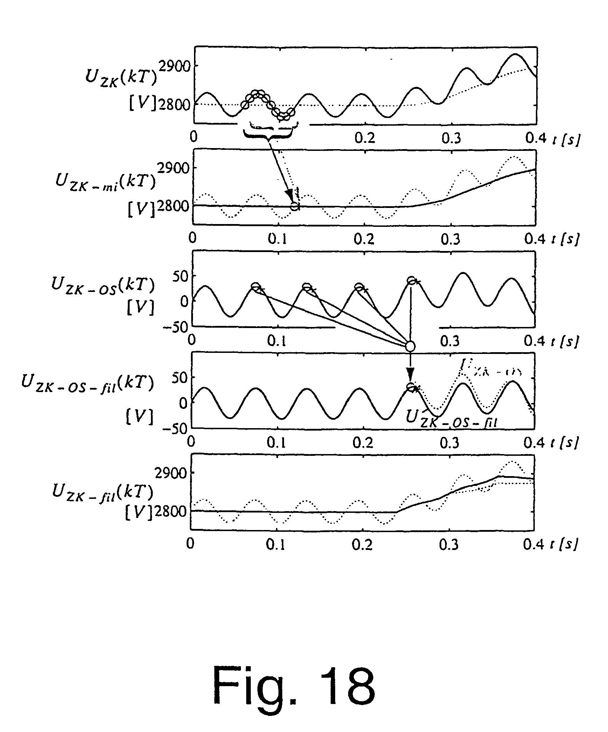

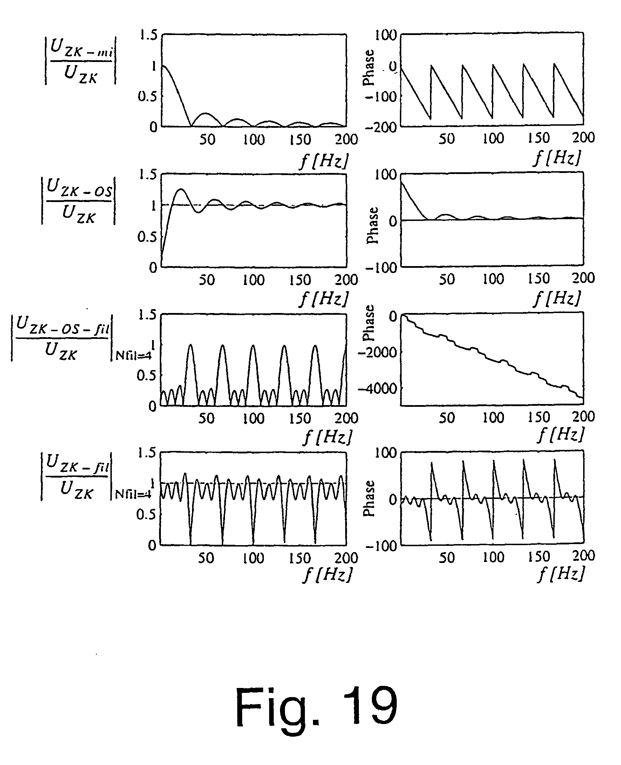

Eine dynamische Filtereinrichtung 9, wie in den Fig. 17B gezeigt, ist in der (nicht gezeigten) Abtastregeleinrichtung implementiert. Eine fliessende Mittelwertbildung $U_{ZK-mi}(t)$ wird über eine halbe Netzperiode, entsprechend $N_2$ Abtastungen, durch einen Mittelwertbildner 11a durchgeführt. Damit werden ab der zweiten Oberschwingung alle geraden Oberschwingungen ausgefiltert, wie in den Signalverläufen gemäss Fig. 18 und 19 gezeigt. Dies resultiert daraus, dass das Integral über eine Halbperiode bei einer zweifachen bzw. 2n-fachen Harmonischen Null wird. Durch Subtraktion des durch den Mittelwertbildner 11a ermittelten fliessenden Mittelwerts $U_{ZK-mi}(t)$ vom Istwert $U_{ZK}(t)$ ergeben sich die Oberschwingungen $U_{ZK-OS}(t)$.

Die Oberschwingungen $U_{ZK-OS}(t)$ werden anschliessend in einer Filtereinrichtung 11b gefiltert, die Ähnlichkeit zu einem sogenannten Kammfilter hat. Bei dieser Filtereinrichtung 11b ist jedoch zu beachten, dass die 2n-fachen Oberschwingungen nicht beeinträchtigt werden. Aus diesem Grund wird eine fliessende Mittelwertfiltereinrichtung vorgeschlagen, die jeweils einen separaten Mittelwertfilter pro Wert einer Halbperiode aufweist. Die Filtereinrichtung 11b bildet den fliessenden Mittelwert über $N_{fil}$ Werte, jeweils einen Wert pro halber Netzperiode und an der entsprechenden Stelle der anderen Halbperioden.

$$U_{ZK-mi}(kt) = \frac{1}{N_2} \cdot \sum_{i=0}^{N_2-1} U_{ZK}((k-i)\cdot T)$$

$$U_{ZK-OS}(kT) = U_{ZK}(kT) - U_{ZK-mi}(kT)$$

$$U_{ZK-OS-fil}(kT) = \frac{1}{N_{fil}} \cdot \sum_{i=0}^{N_{fil}-1} U_{ZK-OS}((k-i\cdot N)\cdot T)$$

$$U_{ZK-fil}(kT) = U_{ZK}(kT) - U_{ZK-OS-fil}(kT)$$

Dieses Prinzip ist in den Signalverläufen gemäss Fig. 18 dargestellt. Zur besseren Übersicht wurden nur wenige Abtastungen pro Periode verwendet, hier nur 10 Abtastungen verglichen mit 360 Abtastungen in Fig. 19). In diesem synthetischen Beispiel ist eine zweite Harmonische der Netzfrequenz in der Zwischenkreisspannung $U_{ZK}(kT)$ enthalten. Nach der Mittelwertbildung durch den Mittelwertbildner 11a ist diese Oberschwingung nicht mehr in $U_{ZK-mi}(kT)$ enthalten. Die Oberschwingungsspannung $U_{ZK-OS}(kT)$ wird durch die Filtereinrichtung 11b über $N_{fil}$ = 4 Halbperioden gefiltert, wodurch in $U_{ZK-fil}(kT)$ in Fig. 18 nur noch stationäre Oberschwingungen enthalten sind (vergleichen mit $U_{ZK-OS}(kT)$, der gepunkteten Linie). Es ist zu beachten, dass der gefilterte Zwischenkreisspannungswert $U_{ZK-fil}(kT)$ gegenüber dem Mittelwert $U_{ZK-mi}(kT)$ verzögerungsfrei wirkt.

Die Berechnung soll an einem Beispiel veranschaulicht werden. Dabei wurde ein 16,7Hz Netz vorausgesetzt, die Abtastfilterung arbeitet mit einer Abtastzeit von T = 83 $\mu$s. Eine Halbperiode besteht damit aus $N_2$ = 360 Abtastwerten. Die Überschwingungen werden durch die Filtereinrichtung 11 b über $N_{fil}$ = 4 Halbperioden gefiltert. Damit ergeben sich folgende z-Übertragungsfunktionen, die in Fig. 19 dargestellt sind:

$$\frac{U_{ZK-mi}(z)}{U_{ZK}(z)} = \frac{1}{N_2} \cdot \sum_{i=0}^{N_2-1} z^{-i}$$

$$\frac{U_{ZK-OS}(z)}{U_{ZK}(z)} = 1 - \frac{1}{N_2} \cdot \sum_{i=0}^{N_2-1} z^{-i}$$

$$\frac{U_{ZK-OS-fil}(z)}{U_{ZK}(z)} = \frac{\left(1 - \frac{1}{N_2} \cdot \sum_{i=0}^{N_2-1} z^{-i}\right) \cdot \left(1 + z^{-N_2} - z^{-2N_2} + z^{-3N_2}\right)}{4}$$

$$\frac{U_{ZK-fil}(z)}{U_{ZK}(z)} = \frac{4 - \left(1 - \frac{1}{N_2} \cdot \sum_{i=0}^{N_2-1} z^{-i}\right) \cdot \left(1 + z^{-N_2} - z^{-2N_2} + z^{-3N_2}\right)}{4}$$

Diese erfindungsgemässe Einrichtung und das erfindungsgemässe Verfahren bringen für alle relevanten Oberschwingungen, insbesondere die vierte Harmonische und mit niedrigerer Priorität die zweite, sechste und achte Harmonische gute Ergebnisse.

Im folgenden nun genauer auf die wichtigsten Regelungsaspekte der erfindungsgemässen Einrichtung sowie des erfindungsgemässen Verfahrens zur netzseitigen Regelung einer Zwischenkreisspannung eingegangen. Dazu werden Situationen an einem "schwachen" Netz mit starken Netzspannungsoberschwingungen betrachtet und anhand dessen der Nutzen der Einrichtung und des Verfahrens zur netzseitigen Regelung einer Zwischenkreisspannung mit Zwischenkreisspannungsfilterung und verschiedenen Netzspannungsaufschaltungen erläutert wird.

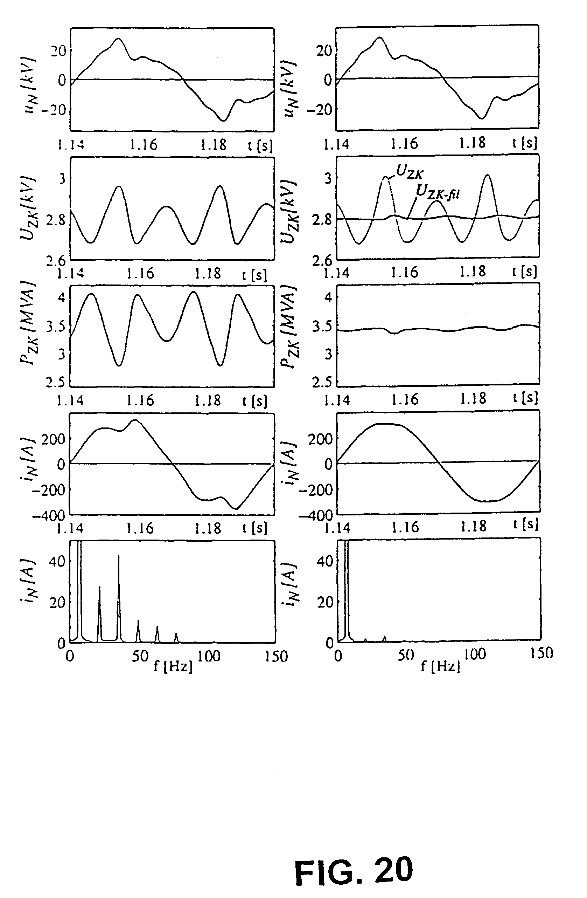

In Fig. 20 ist eine Regelung mit (rechts) und ohne (links) die erfindungsgemässe Einrichtung zur netzseitigen Regelung einer Zwischenkreisspannung dargestellt. Die dargestellte Netzspannung $u_N(t)$ enthält starke Oberschwingungen:

$$U_{N-3OS} = 20\% \ U_{N-GS} \qquad U_{N-9OS} = 5{,}0\% \ U_{N-GS}$$
$$U_{N-5OS} = 8{,}5\% \ U_{N-GS} \qquad U_{N-11OS} = 4{,}5\% \ U_{N-GS}$$
$$U_{N-7OS} = 7{,}5\% \ U_{N-GS}$$

Die Zwischenkreisspannung $U_{ZK}$ enthält in beiden Fällen starke Oberschwingungen. Ohne die erfindungsgemässe Einrichtung zur netzseitigen Regelung einer Zwischenkreisspannung (linke Darstellung in Fig. 20) gehen diese direkt in die Leistungsanforderung $P_{ZK}$ der Zwischenkreisspannungsregeleinrichtung ein und werden in den Sollwert des Netzstromes übertragen. Der Netzstrom $i_N(t)$ enthält sehr hohe Oberschwingungen.

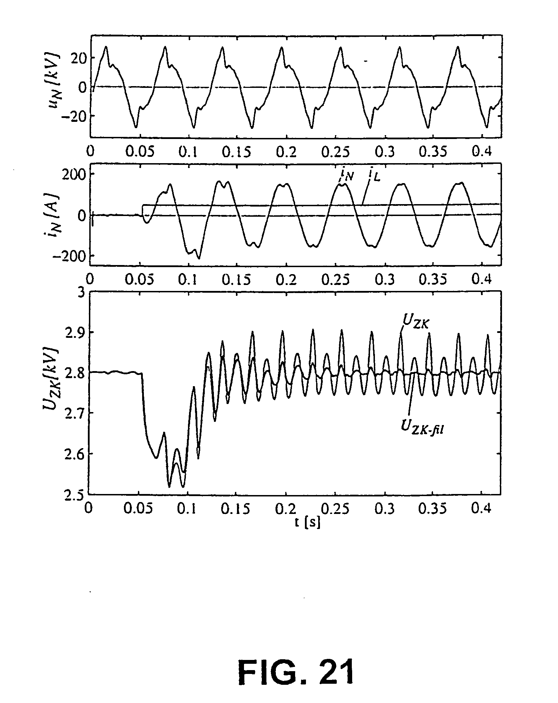

Mit der vorstehend bereits diskutierten dynamischen Filtereinrichtung 9 in der erfindungsgemässen Einrichtung zur netzseitigen Regelung einer Zwischenkreisspannung wird die verzerrte Zwischenkreisspannung $U_{ZK}$ (in Fig. 20 rechts) sehr gut in $U_{ZK-fil}$ gefiltert. Hierbei ist zu beachten, dass der Filteralgorithmus nur die Oberschwingungen mit geraden Vielfachen der Netzfrequenz ausfiltert und daher kaum an Dynamik bei Lastsprüngen verloren geht, wie aus Fig. 21 ersichtlich. Die Leistungsanforderung $P_{ZK}$ des Zwischenkreisspannungsreglers enthält kaum noch Oberschwingungen. Entsprechend wenig Oberschwingungen sind im Netzstrom $i_N(t)$ enthalten.

Somit ist erkennbar, dass die erfindungsgemässe Einrichtung zur netzseitigen Regelung einer Zwischenkreisspannung unter Verwendung einer erfindungsgemässen dynamischen Filtereinrichtung 9 besonders effektiv ist. Bei verzerrter Netzspannung sind wesentlich weniger Oberschwingungen im Netzstrom enthalten, im Beispiel ca. 10mal weniger Oberschwingungen, wobei die dritte bis elfte Oberschwingung berücksichtigt wurde.

Auch das dynamische Verhalten der erfindungsgemässen Einrichtung sowie des erfindungsgemässen Verfahrens ist, wie vorstehend bereits unter Bezugnahme auf Fig. 21 erwähnt, sehr gut. In Fig. 21 ist die Dynamik am Beispiel eines Lastsprungs bei verzerrter Netzspannung dargestellt. Durch die erfindungsgemässe Einrichtung sowie das erfindungsgemässe Verfahren geht somit praktisch keine Dynamik in der Regelung der Zwischenkreisspannung $U_{ZK}$ verloren.

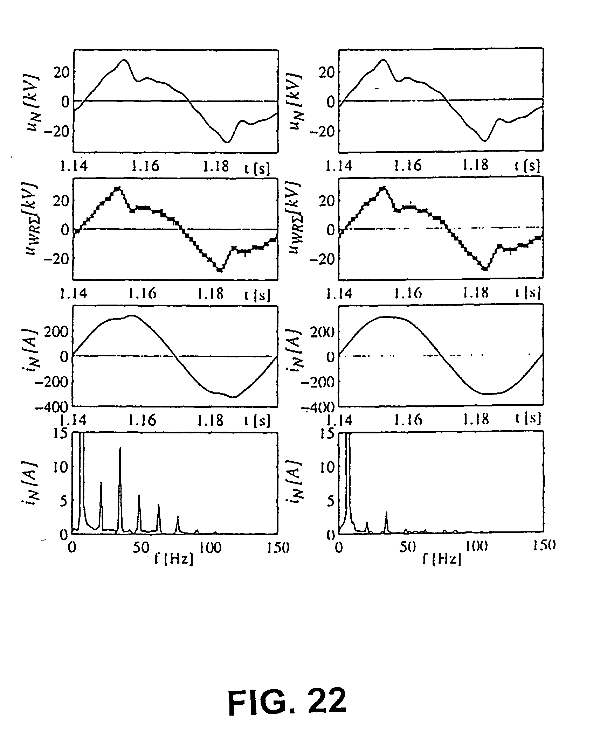

In Fig. 22 sind weiterhin Signalverläufe einer direkten Netzspannungsvorsteuerung mit und ohne erfindungsgemässe Totzeitkompensation durch die Einrichtung zur Totzeitkompensation 7 dargestellt. Es werden wieder dieselben Netzspannungsverzerrungen wie in Fig. 20 angenommen. Auch die dynamische Filtereinrichtung 9 wurde benutzt.

In Fig. 22 sind die Netzspannung $u_N(t)$, die Wechselrichtersummenspannung $u_{WR\Sigma}(t)$, der Netzstrom $i_N(t)$ und das Spektrum des Netzstromes dargestellt. Bei der direkten Netzspannungsaufschaltung ohne Totzeitkompensation, die in Fig. 22 links dargestellt ist, kommt es aufgrund der Totzeit zwischen Messung der Netzspannung $u_N(t)$ und Schalthandlung des Wechselrichters zu viel grösseren Netzstromoberschwingungen als mit Totzeitkompensation (in Fig. 22 auf der rechten Seite). Bereits im zeitlichen Verlauf des Netzstromes $i_N(t)$ ist mit Totzeitkompensation eine wesentliche Verbesserung gegenüber der direkten Netzspannungsaufschaltung ohne Totzeitkompensation ersichtlich.

Im Spektrum des Netzstromes kann eine quantitative Verbesserung um den Faktor 5 festgestellt werden.

Zusammenfassend ist eine Einrichtung und ein Verfahren zur netzseitigen Regelung einer Zwischenkreisspannung, um unerlaubte Netzwirkungen von Harmonischen der Netzspannung auf den Zwischenkreis zu vermindern bzw. zu beseitigen, offenbart. Dazu wird bei der Regelung der Zwischenkreisspannung die netzseitig bezogene Leistung an die motorseitig abgegebene Leistung angepasst. Die erfindungsgemässe Einrichtung weist unter anderem einen Zwischenkreisspannungsregler 1 zur Ermittlung einer Leistungsanforderung, eine Berechnungseinrichtung 2 zur Berechnung eines Wechselrichtersollspannungszeiger und eines Netzstromsollwertzeigers, eine Transformationseinrichtung 3 zur Transformation dieser Zeiger in den Zeitbereich, eine Netzstromregeleinrichtung 4, eine Regelstreckeneinrichtung 5 zur Ermittlung und Regelung eines Netzspannungsgrundschwingungszeigers und einer Netzfrequenz, eine Einrichtung zur Netzspannungsaufschaltung sowie eine dynamische Filtereinrichtung. Die Netzstromregeleinrichtung 4 regelt einen DC-Anteil im Netzstrom aus, indem er durch geeignete Filterung kompensiert wird. Die Einrichtung zur Netzspannungsaufschaltung entlastet die Netzstromregeleinrichtung 4 bei Netzspannungs-Harmonischen, indem Netzspannungsoberschwingungen auf die Wechselrichtersummenspannung aufgeschaltet werden. Die dynamische Filtereinrichtung befindet sich am Eingang der Einrichtung zur netzseitigen Regelung einer Zwischenkreisspannung, filtert die geradzahlige Harmonische der Grundschwingung aus der Zwischenkreisspannung und subtrahiert diese dann vom Istwert der Zwischenkreisspannung.

## Patentansprüche

1. Einrichtung zur netzseitigen Regelung einer Zwischenkreisspannung, wobei der Zwischenkreis zwischen ein Netz und einen Motor geschaltet ist, **gekennzeichnet durch**:

   einen Zwischenkreisspannungsregler (1) zur Ermittlung einer Soll-Leistung ($P_{ZK-n}$) aus einem Sollwert der Zwischenkreisspannung ($U_{ZK-S}$), einem Istwert $U_{ZK}$ und einem Laststrom ($I_{ZK-m}$; $I_L$),
   eine Berechnungseinrichtung (2) zur Berechnung eines Netzstromsollwertzeigers ($\underline{I}_{N-s}$) und eines Wechselrichtersollspannungszeigers ($\underline{U}_{WR_1}$) aus der Soll-Leistung ($P_{ZK-n}$) und einem Netzspannungsgrundschwingungszeiger ($\underline{U}_{N-GS}$),
   eine Regelstreckeneinrichtung (5) zur Transformation der Netzspannung ($U_N(t)$) aus dem Zeitbereich in den Frequenzbereich und Ermittlung eines Netzspannungsgrundschwingungszeigers ($\underline{U}_{N-GS}$) sowie einer Netzfrequenz ($f_N$) und einer Phasenlage ($\alpha$),
   eine Transformationseinrichtung (3) zur Transformation des Wechselrichtersollspannungszeigers ($\underline{U}_{WR_1}$, i=1, 2, ..., n), des Netzspannungsgrundschwingungszeigers ($\underline{U}_{N-GS}$) und des Netzstromsollwertzeigers ($\underline{I}_{N-s}$) in den Zeitbereich, wodurch eine Wechselrichtersollspannung ($u_{WRi-s}(t)$), eine Netzspannungsgrundschwingung ($U_{N-GS}(t)$) und ein Netzstromsollwert ($i_{N-S}(t)$) erhalten werden,
   eine Netzstromregeleinrichtung (4) zur Führung des Netzstromwerts ($i_N(t)$) auf den Netzstromsollwert ($i_{N-s}(t)$) und zur Ausgabe eines entsprechenden Korrekturwerts ($\Delta u_{WR}(t)$) der Wechselrichtersollspannung ($u_{WRi-s}(t)$),
   eine Einrichtung zur Netzspannungsaufschaltung (6) zur Ermittlung von aufzuschaltenden Netzspannungs-Harmonischen aus einer Differenz des Netzspannungsistwertes ($u_N(t)$) und der Netzspannungsgrundschwingung ($u_{N-GS}(t)$),

   wobei die ermittelten aufzuschaltenden Netzspannungs-Harmonischen zum Korekturwert ($\Delta u_{WR}(t)$) addiert werden und die sich ergebende Summe zur Wechselrichtersollspannung ($u_{WRi-s}(t)$) addiert und dann an die netzseitigen Wechselrichter ($WR_1$, ..., $WR_N$) als Wechselrichterspannung ($u_{WRi}(t)$ ausgegeben wird.

2. Einrichtung zur netzseitigen Regelung einer Zwischenkreisspannung nach Anspruch 1, weiterhin mit einer Einrichtung zur Totzeitkompensation (7) zur Kompensation einer Totzeit zwischen Abtastung der Netzspannung ($u_N(t)$) und einem Schaltvorgang der Wechselrichter ($WR_1$, ..., $WR_N$), wobei ein durch eine Kompensationsermittlungseinrichtung (7a) aus vergangenen Netzperioden ermittelter Schätzwert ($\Delta u_{komp}(t)$) zur Netzspannung ($u_N(t)$) addiert wird.

3. Einrichtung zur netzseitigen Regelung einer Zwischenkreisspannung nach Anspruch 2, wobei die Einrichtung zur Totzeitkompensation (7) weiterhin eine Filfiereinrichtung (8) aufweist, die von der Kompensationsermittlungseinrichtung (7a) ausgegebene Schätzwerte ($\Delta u_{komp}(t)$) über mehrere Netzperioden speichert und daraus einen fliessenden Mittelwert ($\Delta u_{k-fil}$) über mehrere Netzperioden bildet und zur Addition zur Netzspannung ($u_N(t)$) ausgibt.

4. Einrichtung zur netzseitigen Regelung einer Zwischenkreisspannung nach Anspruch 2 oder 3, wobei

die Einrichtung zur Totzeitkompensation (7) an ihrem Eingang eine Tiefpassfiltereinrichtung zur Filterung hoher Frequenzen ab einigen kHz aufweist.

**5.** Einrichtung zur netzseitigen Regelung einer Zwischenkreisspannung nach einem der Ansprüche 1 bis 4, weiterhin mit einer dynamischen Filtereinrichtung (9) zur Bestimmung von Oberschwingungen der Zwischenkreisspannung ($U_{ZK}$, Filterung der Oberschwingungen ($U_{ZK-OS}$, $U_{ZK-OS-fil}$; $u_2\sin2\omega t$, ..., $u_{2n}\sin2n\omega t$) und Subtraktion der Oberschwingungen (($U_{ZK-OS}$, $U_{ZK-OS-fil}$; $u_2\sin2\omega t$, ..., $u_{2n}\sin2n\omega t$) von der Zwischenkreisspannung ($U_{ZK}$) zur Ermittlung einer gefilterten Zwischenkreisspannung ($U_{ZK-fil}$) ohne Oberschwingungen.

**6.** Einrichtung zur netzseitigen Regelung einer Zwischenkreisspannung nach Anspruch 5, wobei
die dynamische Filtereinrichtung (9) eine DFT-Filtereinrichtung (10a) zur separaten Transformation aller Oberschwingungen in den Frequenzbereich und zur Ausgabe von Oberschwingungszeigern ($U_2$, ..., $U_{2n}$) und eine IFT-Filtereinrichtung 10b zur Rücktransformation in den Zeitbereich umfasst, die die Oberschwingungen ($u_2\sin2\omega t$, ..., $u_{2n}\sin2\omega t$) ausgibt.

**7.** Einrichtung zur netzseitigen Regelung einer Zwischenkreisspannung nach Anspruch 5, wobei
die dynamische Filtereinrichtung (9) einen Mittelwertbildner (11a) zur Bildung eines fliessenden Mittelwerts und damit zum Herausfiltern aller geraden Oberschwingungen ab der zweiten Oberschwingung und eine Filtereinrichtung (11b) zur Bildung eines fliessenden Mittelwerts über $N_{fil}$ Werte, wobei jeweils ein Wert pro halber Netzperiode und an entsprechenden Stellen anderer Halbperioden gebildet wird, die die Oberschwingungen ($U_{ZK-OS-fil}$) ausgibt, umfasst.

**8.** Verfahren zur netzseitigen Regelung einer Zwischenkreisspannung, wobei der Zwischenkreis zwischen ein Netz und einen Motor geschaltet ist, **gekennzeichnet durch** folgende Schritte:

Ermitteln einer Soll-Leistung ($P_{ZK-n}$) aus einem Sollwert der Zwischenkreisspannung ($U_{ZK-S}$), einem Istwert der Zwischenkreisspannung ($U_{ZK}$) und einem Laststrom ($I_{ZK-m}$; $I_L$),
Berechnen eines Netzstromsollwertzeigers ($\underline{I}_{N-s}$) und eines Wechselrichtersollspannungszeigers ($\underline{U}_{WRi}$) aus der Soll-Leistung ($P_{ZK-n}$) und einem Netzspannungsgrundschwingungszeiger ($\underline{U}_{N-GS}$),
Transformieren der Netzspannung ($u_N(t)$) aus dem Zeitbereich in den Frequenzbereich und Ermitteln eines Netzspannungsgrundschwingungszeigers ($\underline{U}_{N-GS}$) sowie einer Netzfrequenz ($f_N$) und einer Phasenlage ($\alpha$),
Transformieren des Wechselrichtersollspannungszeigers ($\underline{U}_{WRi}$, i=1, 2, ..., n), des Netzspannungsgrundschwingungszeigers ($\underline{U}_{N-GS}$) und des Netzstromsollwertzeigers ($\underline{I}_{N-s}$) in den Zeitbereich, wodurch eine Wechselrichtersollspannung ($u_{WRi}(t)$), eine Netzspannungsgrundschwingung ($u_{N-GS}(t)$) und ein Netzstromsollwert ($i_{N-s}(t)$) erzeugt wird,
Führen des Netzstromwerts ($i_N(t)$) auf den Netzstromsollwert ($i_{N-s}(t)$) und Ausgeben eines entsprechenden Korrekturwerts ($\Delta u_{WR}(t)$) der Wechselrichtersollspannung ($u_{WRi-s}(t)$), und
Ermitteln von aufzuschaltenden Netzspannungs-Harmonischen aus einer Differenz des Netzspannungsistwertes ($u_N(t)$) und der Netzspannungsgrundschwingung ($u_{N-GS}(t)$), Addieren der ermittelten aufzuschaltenden Netzspannungs-Harmonischen zum Korrekturwert ($\Delta u_{WR}(t)$), Addieren der sich ergebenden Summe zur Wechselrichtersollspannung ($u_{WRi}(t)$) und Ausgeben an die netzseitigen Wechselrichter ($WR_1$, ..., $WR_N$) als Wechselrichterspannung ($u_{WRi}(t)$).

**9.** Verfahren zur netzseitigen Regelung einer Zwischenkreisspannung nach Anspruch 8, mit dem weiteren Schritt
Kompensieren einer Totzeit zwischen Abtastung der Netzspannung ($u_N(†)$) und einem Schaltvorgang der Wechselrichter ($WR_1$, ..., $WR_N$), indem ein durch eine Kompensationsermittlungseinrichtung (7a) aus vergangenen Netzperioden ermittelter Schätzwert ($\Delta u_{komp}(t)$) zur Netzspannung ($u_N(t)$) addiert wird.

**10.** Verfahren zur netzseitigen Regelung einer Zwischenkreisspannung nach Anspruch 9, wobei
in dem Schritt des Kompensieren ausgegebene Schätzwerte ($\Delta u_{komp}(t)$) über mehrere Netzperioden gespeichert werden und daraus ein fliessender Mittelwert ($\Delta u_{k-fil}$) über mehrere Netzperioden gebildet wird und zur Netzspannung ($u_N(t)$) addiert wird.

**11.** Verfahren zur netzseitigen Regelung einer Zwischenkreisspannung nach einem der Ansprüche 8 bis 10, mit den weiteren Schritten Ermitteln einer gefilterten Zwischenkreisspannung ($U_{ZK-fil}$) ohne Oberschwingungen durch Bestimmen von Oberschwingungen der Zwischenkreisspannung ($U_{ZK}$), Filtern der Oberschwingungen ($U_{ZK-OS}$, $U_{ZK-fil}$; $u_2\sin2\omega t$, ..., $u_{2n}\sin2n\omega t$) und Subtrahieren der Oberschwingungen (($U_{ZK-OS}$, $U_{ZK-OS-fil}$; $u_2\sin2\omega t$, ..., $u_{2n}\sin2n\omega t$) von der Zwischenkreisspannung ($U_{ZK}$).

**12.** Verfahren zur netzseitigen Regelung einer Zwischenkreisspannung nach Anspruch 11, wobei im Schritt des Ermitteln einer gefilterten Zwischenkreisspannung ($U_{ZK\text{-}fil}$) alle Oberschwingungen mittels einer DFT separat in den Frequenzbereich transformiert und Oberschwingungszeiger ($U_2$, ..., $U_{2n}$) ermittelt und mittels einer IFT in den Zeitbereich rücktransformiert und als Oberschwingungen ($u_2 \sin 2\omega t$, ..., $u_{2n} \sin 2\omega t$) ausgegeben werden.

**13.** Verfahren zur netzseitigen Regelung einer Zwischenkreisspannung nach Anspruch 11, wobei im Schritt des Ermittelns einer gefilterten Zwischenkreisspannung ($U_{ZK\text{-}fil}$) ein fliessenden Mittelwert der Zwischenkreisspannung ($U_{ZK}$) gebildet wird, alle geraden Oberschwingungen ab der zweiten Oberschwingung herausgefiltert werden und ein fliessender Mittelwerts über $N_{fil}$ Werte gebildet wird, wobei jeweils ein Wert pro halber Netzperiode und an entsprechenden Stellen anderer Halbperioden gebildet wird, und die Oberschwingungen ($U_{ZK\text{-}OS\text{-}fil}$) ausgeben werden.

## Claims

**1.** A device for a mains-side control of an intermediate circuit voltage, said intermediate circuit being connected between a mains supply and a motor, **characterized by**:

an intermediate circuit voltage controller (1) for determining a nominal output ($P_{ZK\text{-}n}$) from a set value of the intermediate circuit voltage ($U_{ZK\text{-}S}$), an actual value ($U_{ZK}$) and a load current ($I_{ZK\text{-}m}$; $I_L$),
a computing device (2) for computing a mains current set value pointer ($\underline{I}_{N\text{-}S}$) and an inverter set voltage pointer ($\underline{U}_{WRi}$) from the nominal output ($P_{ZK\text{-}n}$) and a mains voltage basic oscillation pointer ($\underline{U}_{N\text{-}GS}$),
a process control device (5) for transforming the mains voltage ($U_N(t)$) from the time domain into the frequency domain and determining a mains voltage basic oscillation pointer ($\underline{U}_{N\text{-}GS}$) as well as a mains frequency ($f_N$) and a phase position ($\alpha$),
a transforming device (3) for transforming the inverter set voltage pointer ($\underline{U}_{Wri}$, i=1, 2, ..., n), the mains voltage basic oscillation pointer ($\underline{U}_{N\text{-}GS}$) and the mains current set value pointer ($\underline{I}_{N\text{-}S}$) into the time domain, thus obtaining an inverter set voltage ($u_{WRi\text{-}s}(t)$), a mains voltage basic oscillation ($U_{N\text{-}GS}(t)$), and a mains current set value ($i_{N\text{-}s}(t)$),
a mains current controller (4) for bringing the mains current value ($i_N(t)$) to the mains current set value ($i_{N\text{-}s}(t)$) and for outputting a corresponding correction value ($\Delta u_{WR}(t)$) of the inverter set voltage ($u_{WRi\text{-}s}(t)$), a mains voltage entering device (6) for determining mains voltage harmonics to be entered from a difference between the mains voltage actual value ($u_N(t)$) and the mains voltage basic oscillation ($U_{N\text{-}GS}(t)$),

wherein the determined mains voltage harmonics to be entered are added to the correction value ($\Delta u_{WR}(t)$) and the resulting sum is added to the inverter set voltage ($u_{WRi\text{-}s}(t)$) and then output to the mains-side inverters ($WR_1$, ..., $WR_N$) as the inverter voltage ($u_{WRi}(t)$).

**2.** The device for a mains-side control of an intermediate circuit voltage according to claim 1, further comprising a dead-time compensation device (7) for compensating for a dead-time between detecting the mains voltage ($u_N(t)$) and a switching operation of the inverters ($WR_1$, ..., $WR_N$) , wherein an estimated value ($\Delta u_{komp}(t)$) obtained by a compensation determining device (7a) from previous mains periods is added to the mains voltage ($u_N(t)$).

**3.** The device for a mains-side control of an intermediate circuit voltage according to claim 2, wherein the dead-time compensation device (7) further comprises a filtering device (8) which stores estimated values ($\Delta u_{komp}(t)$) output by the compensation determining device (7a) over multiple mains periods, forms a floating average value ($\Delta u_{k\text{-}fil}$) of these over multiple mains periods, and outputs it for addition to the mains voltage ($u_N(t)$).

**4.** The device for a mains-side control of an intermediate circuit voltage according to claim 2 or 3, wherein the dead-time compensation device (7) has at its input a low-pass filtering device for filtering high frequencies beginning at several kHz.

**5.** The device for a mains-side control of an intermediate circuit voltage according to one of claims 1 to 4, further comprising a dynamic filtering device (9) for determining harmonic oscillations of the intermediate circuit voltage ($U_{ZK}$), filtering the harmonic oscillations ($U_{ZK\text{-}OS}$, $U_{ZK\text{-}OS\text{-}fil}$ ; $u_2 \sin 2\omega t$, ..., $u_{2n} \sin 2n\omega t$), and subtraction of the harmonic oscillations ($U_{ZK\text{-}OS}$, $U_{ZK\text{-}OS\text{-}fil}$; $u_2 \sin 2\omega t$, ..., $u_{2n} \sin 2n\omega t$) from the intermediate circuit voltage ($U_{ZK}$) for determining a filtered intermediate circuit voltage ($U_{ZK\text{-}fil}$) without harmonic oscillations.

**6.** The device for a mains-side control of an intermediate circuit voltage according to claim 5, wherein the dynamic filtering device (9) comprises a DFT filtering device (10a) for separately transforming all harmonic oscillations into the frequency domain and for outputting harmonic oscillation pointers ($U_2$, ..., $U_{2n}$) as well as an IFT filtering device (10b) for re-transforming into the time domain which outputs the harmonic oscillations ($u_2\sin2\omega t$, ..., $u_{2n}\sin2n\omega t$).

**7.** The device for a mains-side control of an intermediate circuit voltage according to claim 5, wherein the dynamic filtering device (9) comprises an averaging means (11a) for creating a floating average value and thus for filtering all even harmonic oscillations from the second harmonic oscillation onward, and a filtering device (11b) for creating a floating average value over $N_{fil}$ values, in doing so forming one value per each half mains period and at corresponding points of other half periods, and for outputting the harmonic oscillations ($U_{ZK-OS-fil}$).

**8.** A method for a mains-side control of an intermediate circuit voltage, said intermediate circuit being connected between a mains supply and a motor, **characterized by** the following steps:

determining a nominal output ($P_{ZK-n}$) from a set value of the intermediate circuit voltage ($U_{ZK-s}$), an actual value of the intermediate circuit voltage ($U_{ZK}$) and a load current ($I_{ZK-m}$; $I_L$),
computing a mains current set value pointer ($\underline{I}_{N-S}$) and an inverter set voltage pointer ($\underline{U}_{WRi}$) from the nominal output ($P_{ZK-n}$) and a mains voltage basic oscillation pointer ($\underline{U}_{N-GS}$), transforming the mains voltage ($U_N(t)$) from the time domain into the frequency domain and determining a mains voltage basic oscillation pointer ($\underline{U}_{N-GS}$) as well as a mains frequency ($f_N$) and a phase position ($\alpha$) ,
transforming the inverter set voltage pointer ($\underline{U}_{Wri}$, i=1, 2, ..., n), the mains voltage basic oscillation pointer ($\underline{U}_{N-GS}$) and the mains current set value pointer ($\underline{I}_{N-s}$) into the time domain, thus obtaining an inverter set voltage ($u_{Wri-s}(t)$), a mains voltage basic oscillation ($U_{N-GS}(t)$), and a mains current set value ($i_{N-S}(t)$),
bringing the mains current value ($i_N(t)$) to the mains current set value ($i_{N-S}(t)$) and outputting a corresponding correction value ($\Delta u_{WR}$ (t)) of the inverter set voltage ($u_{WRi-s}(t)$),
determining mains voltage harmonics to be entered from a difference between the mains voltage actual value ($u_N(t)$) and the mains voltage basic oscillation ($U_{N-GS}$ (t)), adding the determined mains voltage harmonics to be entered to the correction value ($\Delta u_{WR}(t)$), adding the resulting sum to the inverter set voltage ($u_{WRi-s}(t)$) and outputting to the mains-side inverters ($WR_1$, ..., $WR_N$) as the inverter voltage ($u_{WRi}$ (t)).

**9.** The method for a mains-side control of an intermediate circuit voltage according to claim 8, comprising the additional step of
compensating for a dead-time between detecting the mains voltage ($u_N(t)$) and a switching operation of the inverters ($WR_1$, ..., $WR_N$) by adding to the mains voltage ($u_N(t)$) an estimated value ($\Delta u_{komp}(t)$) obtained by a compensation determining device (7a) from previous mains periods.

**10.** The method for a mains-side control of an intermediate circuit voltage according to claim 9, wherein estimated values ($\Delta u_{komp}$ (t)) output in the compensating step are stored over multiple mains periods and a floating average value ($\Delta u_{k-fil}$) of these over multiple mains periods is formed and added to the mains voltage ($u_N(t)$).

**11.** The method for a mains-side control of an intermediate circuit voltage according to one of claims 8 to 10, comprising the additional steps of
determining a filtered intermediate circuit voltage ($U_{ZK-fil}$) without harmonic oscillations by determining harmonic oscillations of the intermediate circuit voltage ($U_{ZK}$), filtering the harmonic oscillations ($U_{ZK-OS}$, $U_{ZK-OS-fil}$; $u_2\sin2\omega t$, ..., $u_{2n}\sin2n\omega t$) and subtracting the harmonic oscillations ($U_{ZK-OS}$, $U_{ZK-OS-fil}$; $u_2\sin2\omega t$, ..., $u_{2n}\sin2n\omega t$) from the intermediate circuit voltage ($U_{ZK}$).

**12.** The method for a mains-side control of an intermediate circuit voltage according to claim 11, wherein in the step of determining a filtered intermediate circuit voltage ($U_{ZK-fil}$) all harmonic oscillations are separately transformed into the frequency domain by means of a DFT, harmonic oscillation pointers ($U_2$, ..., $U_{2n}$) are determined, re-transformed into the time domain by means of an IFT and output as harmonic oscillations ($u_2\sin_2\omega t$, ..., $u_{2n}\sin2\omega t$).

**13.** The method for a mains-side control of an intermediate circuit voltage according to claim 11, wherein in the step of determining a filtered intermediate circuit voltage ($U_{ZK-fil}$) a floating average value of the intermediate circuit voltage ($U_{ZK}$) is created, all even harmonic oscillations from the second harmonic oscillation onward are filtered out, and a floating average value over $N_{fil}$ values is formed, in doing so forming one value per each half mains period and at corresponding points of other half periods, and the harmonic oscillations ($U_{ZK-OS-fil}$) are output.

**Revendications**

1.  Dispositif pour la régulation côté réseau d'une tension de circuit intermédiaire, le circuit intermédiaire étant connecté entre un réseau et un moteur, **caractérisé par** un régulateur de tension de circuit intermédiaire (1) pour la détermination d'une puissance de consigne ($P_{ZK-n}$) sur la base d'une valeur de consigne de tension de circuit intermédiaire ($U_{ZK-S}$), d'une valeur réelle ($U_{ZK}$) et d'un courant de charge ($I_{ZK-m}$; $I_L$),
    un système de calcul (2) pour le calcul d'un indicateur de valeur de consigne du courant de réseau ($I_{N-s}$) et d'un indicateur de tension de consigne d'onduleur ($U_{WR1}$) à partir de la puissance de consigne ($P_{ZK-n}$) et d'un indicateur d'oscillation fondamentale de la tension de réseau ($U_{N-GS}$), un dispositif de régulation (5) pour la transformation de la tension de réseau ($U_N(t)$) de la plage de temps, en la gamme de fréquences et la détermination d'un indicateur d'oscillation fondamentale de la tension de réseau ($U_{N-GS}$) ainsi que d'une fréquence de réseau ($f_N$) et d'une position de phase ($\alpha$),
    un système de transformation (3) pour la transformation de l'indicateur de tension de consigne de l'onduleur ($U_{WR1}$, i=1, 2, .., n), de l'indicateur d'oscillation fondamentale de la tension de réseau ($U_{N-GS}$) et de l'indicateur de valeur de consigne du courant de réseau ($I_{N-s}$) dans la plage de temps, ce qui donne une tension de consigne de l'onduleur ($U_{WRi-s}(t)$), une oscillation fondamentale de tension de réseau ($U_{N-GS}(t)$) et une valeur de consigne du courant de réseau ($i_{N-s}(t)$),
    un système de régulation du courant de réseau (4) pour amener la valeur du courant du réseau ($i_N(t)$) à la valeur de consigne du courant de réseau ($i_{N-s}(t)$) et pour délivrer une valeur de correction correspondante ($\Delta U_{WR}(t)$) de la tension de consigne de l'onduleur ($U_{WRi-S}(t)$),
    un système d'inclusion de la tension de réseau (6), afin de déterminer, sur la base d'une différence entre la valeur réelle de tension de réseau ($U_N(t)$) et l'oscillation fondamentale de la tension de réseau ($U_{N-GS}(t)$), des harmoniques de tension de réseau à surajouter,
    les harmoniques déterminées de tension de réseau à surajouter étant additionnées avec la valeur de correction ($\Delta U_{WR}(t)$) et le résultat obtenu étant additionné avec la tension de consigne de l'onduleur ($U_{WRi-s}(t)$), et délivré ensuite aux onduleurs ($WR_1$, ..., $WR_N$), en tant que tension d'onduleur ($U_{WRi-s}(t)$).

2.  Dispositif pour la régulation côté réseau d'une tension de circuit intermédiaire selon la revendication 1, comprenant en plus un système de compensation du temps de retard pour la compensation d'un temps de retard entre un échantillonnage de la tension de réseau ($U_N(t)$) et un processus de commutation des onduleurs ($WR_1$,....$WR_N$), une valeur estimative ($\Delta U_{komp}(t)$), déterminée par un système de détermination de compensation (7a), à partir de périodes antérieures du réseau, étant additionnée avec la tension de réseau ($U_N(t)$).

3.  Dispositif pour la régulation côté réseau d'une tension de circuit intermédiaire selon la revendication 2, le système de compensation du temps de retard (7) présentant en plus un dispositif de filtrage (8), qui mémorise, pendant plusieurs périodes de réseau, les valeurs estimatives ($\Delta U_{komp}(t)$), délivrées par le système de détermination de compensation (7a), et forme sur cette base une valeur moyenne flottante ($\Delta U_{k-fil}$) et la délivre aux fins d'addition avec la tension de secteur ($U_N(t)$).

4.  Dispositif pour la régulation côté réseau d'une tension de circuit intermédiaire selon revendication 2 ou 3, le système de compensation du temps de retard (7) présentant à son entrée un système de filtre passe-bas pour le filtrage de hautes fréquences supérieures à quelques kHz.

5.  Dispositif pour la régulation côté réseau d'une tension de circuit intermédiaire selon l'une des revendications 1 à 4, avec, en plus, un système de filtrage dynamique (9) pour déterminer les oscillations harmoniques de la tension de circuit intermédiaire ($U_{ZK}$), pour filtrer les oscillations harmoniques ($U_{ZK-OS}$, $U_{ZK-OS-fil}$ ; $U_2\sin2\omega t$, ..., $U_{2n}\sin2n\omega t$) et pour soustraire les oscillations harmoniques ($U_{ZK-OS}$, $U_{ZK-OS-fil}$, $U_2\sin2\omega t$, ..., $U_{2n}s\sin2n\omega t$) de la tension de circuit intermédiaire ($U_{ZK}$), afin de déterminer une tension de circuit intermédiaire ($U_{ZK-fil}$) filtrée, sans oscillations harmoniques.

6.  Dispositif pour la régulation côté réseau d'une tension de circuit intermédiaire selon la revendication 5, sachant que le système de filtrage dynamique (9) comprend un système de filtrage DFT (10a) pour la transformation séparée de toutes les oscillations harmoniques dans la gamme de fréquence et pour la sortie d'indicateurs d'oscillations harmoniques ($U_2$, ... $U_{2n}$), et un système de filtrage IFT (10b) pour la transformation inverse dans la plage de temps, qui délivre les oscillations harmoniques ($U_2\sin2\omega t$, ..., $U_{2n}\sin2\omega t$).

7.  Dispositif pour la régulation côté réseau d'une tension de circuit intermédiaire selon la revendication 5, sachant que le système de filtrage dynamique (9) comprend un dispositif de détermination de la valeur moyenne (11a) pour former une valeur moyenne flottante, et ainsi pour le filtrage de toutes les oscillations harmoniques paires, à partir de la deuxième oscillation harmonique, et un système de filtrage (11b) pour la formation d'une valeur moyenne flottante pour des valeurs $N_{fil}$, sachant qu'une valeur est établie pour chaque demi-période de réseau et à des endroits correspondants d'autres demi-périodes, lequel système délivre les oscillations harmoniques ($U_{ZK-OS-fil}$).

**8.** Procédé pour la régulation côté réseau d'une tension de circuit intermédiaire, sachant que le circuit intermédiaire est connecté entre un réseau et un moteur, **caractérisé par** les étapes suivantes:

Détermination d'une puissance de consigne ($P_{ZK-n}$) à partir d'une valeur de consigne de la tension de circuit intermédiaire ($U_{ZK-s}$), d'une valeur réelle de la tension de circuit intermédiaire ($U_{ZK}$) et d'un courant de charge ($I_{ZK-m}$; $I_L$),
calcul d'un indicateur de valeur de consigne du courant de réseau ($I_{N-s}$) et d'un indicateur de tension de consigne d'onduleur ($U_{WRi}$) sur la base de la puissance de consigne ($P_{ZK-n}$) et d'un indicateur d'oscillation fondamentale de la tension de réseau ($\underline{U}_{N-GS}$),
transformation de la tension de réseau ($U_N(t)$) sur la base de la plage de temps dans la gamme de fréquence et détermination d'un indicateur d'oscillation fondamentale de tension de réseau ($U_N$-$_{GS}$), ainsi que d'une fréquence de réseau ($f_N$) et d'une position de phase ($\alpha$),
transformation de l'indicateur de tension de consigne d'onduleur ($\underline{U}_{WRi}$, i=1, 2, ..., n), de l'indicateur d'oscillation fondamentale de la tension de réseau ($U_{N-GS}$) et de l'indicateur de valeur de consigne du courant de réseau ($\underline{I}_{N-s}$) dans la plage de temps, ce en raison de quoi sont générées une tension de consigne d'onduleur ($U_{WRi}$(t)), une oscillation fondamentale de tension de réseau ($U_{N-GS}(t)$) et une valeur de consigne du courant de réseau ($i_{N-s}(t)$),
amenée de la valeur du courant de réseau ($i_N(t)$) à la valeur de consigne du courant de réseau ($i_{N-s}(t)$), et délivrance d'une valeur de correction correspondante ($\Delta U_{WR}(t)$) de la tension de consigne d'onduleur $U_{WRi-s}$(t)), et détermination des harmoniques de tension de réseau à surajouter, sur la base d'une différence entre la valeur réelle de tension de réseau ($U_N(t)$) et de l'oscillation fondamentale de tension de réseau ($U_{N-GS}$ (t) ), addition des harmoniques déterminées de tension de réseau, à surajouter, avec la valeur de correction ($\Delta U_{WR}$ (t)), et addition du résultat avec la tension de consigne d'onduleur $U_{WRi-s}(t)$) et délivrance à l'onduleur (WR$_1$, ..., WR$_N$), côté sortie, en tant que tension d' onduleur ($U_{WRi-s}$ (t)).

**9.** Procédé pour la régulation côté réseau d'une tension de circuit intermédiaire selon la revendication 8, qui comprend, en plus, l'étape suivante :

Compensation d'un temps de retard entre un échantillonnage de la tension de secteur ($U_N(t)$) et un processus de commutation d'un onduleur (WR$_1$, ..., WR$_N$), une valeur estimative ($\Delta U_{komp}(t)$), déterminée par un système de détermination de compensation (7a), sur la base de périodes de réseau antérieures, étant additonnée avec la tension de secteur ($U_N(t)$).

**10.** Procédé pour la régulation côté réseau d'une tension de circuit intermédiaire selon la revendication 9, les valeurs estimatives ($\Delta U_{komp}(t)$), délivrées au cours de l'étape de compensation sur plusieurs périodes de réseau, étant mémorisées, et une valeur moyenne flottante ($\Delta U_{k-fil}$), établie sur cette base, étant formée sur plusieurs périodes de réseau et additionnée avec la tension de secteur ($U_N(t)$).

**11.** Procédé pour la régulation côté réseau d'une tension de circuit intermédiaire selon l'une des revendications 8 à 10, qui comprend comme étapes supplémentaires la détermination d'une tension de circuit intermédiaire filtrée ($U_{ZK-fil}$), sans oscillations harmoniques, par détermination d'oscillations harmoniques de la tension de circuit intermédiaire ($U_{ZK}$), le filtrage des oscillations harmoniques ($U_{ZK-OS}$, $U_{ZK-OS-fil}$ ; $U_2sin2\omega t$, ..., $U_{2n}sin2n\omega t$) et la soustraction des oscillations harmoniques ($U_{ZK-OS}$, $U_{ZK-OS-fil}$) de la tension de circuit intermédiaire ($U_{ZK}$).

**12.** Procédé pour la régulation côté réseau d'une tension de circuit intermédiaire selon la revendication 11, sachant que, lors de l'étape de la détermination d'une tension de circuit intermédiaire filtrée ($U_{ZK-fil}$), toutes les oscillations harmoniques sont transformées séparément, au moyen d'une DFT, dans la gamme de fréquence, et des indicateurs d'oscillations harmoniques ($U_2$, ..., $U_{2n}$) sont déterminés et transformés inversement dans la plage de temps, au moyen d'une IFT, et délivrés en tant qu'oscillations harmoniques ($U_2sin2\omega t$, ..., $U_{2n}sin2n\omega t$).

**13.** Procédé pour la régulation côté réseau d'une tension de circuit intermédiaire selon la revendication 11, sachant que, lors de l'étape de détermination d'une tension de circuit intermédiaire filtrée ($U_{ZK-fil}$), une valeur moyenne flottante de la tension de circuit intermédiaire ($U_{ZK}$) est formée, toutes les oscillations harmoniques, paire sont

**EP 1 204 197 B1**

éliminées par filtrage, à compter de la deuxième oscillation harmonique, et une valeur moyenne flottante est formée sur des valeurs $N_{fil}$, une valeur étant formée pour chaque demi-période et à des endroits correspondants d'autres demi-périodes, et les oscillations harmoniques ($U_{ZK-OS-fil}$) étant délivrées.

**21**

Fig. 1

Fig. 2

# Fig. 3

Fig. 4

Fig. 5

# Fig. 6

# Fig. 7

Fig. 8

Fig. 9

Fig. 10

Fig. 11

Fig. 12

# Fig. 13

# Fig. 14

# Fig. 15

Fig. 16

FIG. 17 A

$U_{ZK}(t)$

$U_{ZK\text{-}mt}(t)$  $U_{ZK\text{-}OS}(t)$

$U_{ZK\text{-}OS\text{-}fil}(t)$  $U_{ZK\text{-}fil}(t)$

110

118

$\bar{x}$
Mittelwert

Filter

Fig. 17B

Fig. 18

Fig. 19

FIG. 20

FIG. 21

# FIG. 22

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5373223 A